# EUROPÄISCHE PATENTANMELDUNG

(11) **EP 4 084 261 A1**
(43) Veröffentlichungstag der Anmeldung: **02.11.2022**
(21) Anmeldenummer: 21170991.0
(22) Anmeldetag: 28.04.2021
(51) Int. Cl.: H02J 3/48, H02J 3/50

(54) **VERFAHREN ZUM EINSPEISEN ELEKTRISCHER LEISTUNG IN EIN ELEKTRISCHES VERSORGUNGSNETZ**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Verfahren zum Austauschen elektrischer Leistung zwischen einer Einspeiseeinheit, insbesondere einer Windenergieanlage (100) oder einem Windpark (112), und einem elektrischen Versorgungsnetz (120) an einem Netzanschlusspunkt (118), wobei das elektrische Versorgungsnetz (120) eine veränderliche Netzspannung und eine veränderliche Netzfrequenz aufweist, und durch eine Nennspannung und eine Nennfrequenz gekennzeichnet ist, das Austauschen elektrischer Leistung das Austauschen von Wirk- und Blindleistung umfasst, das Austauschen der Wirkleistung in Abhängigkeit von einer frequenz- und spannungsabhängigen Wirkleistungssteuerfunktion gesteuert wird, wobei die Wirkleistungssteuerfunktion eine zusätzlich zu einem Wirkleistungsgrundwert einzuspeisende Zusatzwirkleistung in Abhängigkeit von der erfassten Netzfrequenz und in Abhängigkeit von der erfassten Netzspannung vorgibt, das Austauschen der Blindleistung in Abhängigkeit von einer frequenz- und spannungsabhängigen Blindleistungssteuerfunktion gesteuert wird, wobei die Blindleistungssteuerfunktion eine zusätzlich zu einem Blindleistungsgrundwert einzuspeisende Zusatzblindleistung in Abhängigkeit von der erfassten Netzfrequenz und in Abhängigkeit von der erfassten Netzspannung vorgibt, und die Wirkleistungssteuerfunktion und die Blindleistungssteuerfunktion jeweils eine Steuerfunktion bilden und in Abhängigkeit von wenigstens einer Netzcharakteristik und/oder wenigstens einem Netzzustand des elektrischen Versorgungsnetzes eingestellt werden.

## Beschreibung

Die vorliegende Erfindung betrifft ein Verfahren zum Austauschen elektrischer Leistung zwischen einer Einspeiseeinheit und einem elektrischen Versorgungsnetz. Außerdem betrifft die Erfindung eine solche Einspeiseeinheit, insbesondere eine Windenergieanlage oder einen Windpark.

Windenergieanlagen oder Windparks oder andere Einspeiseeinheiten zum Einspeisen elektrischer Leistung in ein elektrisches Versorgungsnetz sind bekannt. Sie können synonym auch als Einspeiser bezeichnet werden. Solche Einspeiser dienen nicht nur dem Bereitstellen der eingespeisten elektrischen Leistung, sondern auch einem Betreiben, Stützen und/oder Stabilisieren des elektrischen Versorgungsnetzes.

Sind elektrische Versorgungsnetze bisher überwiegend oder ausschließlich durch Großkraftwerke mit direkt gekoppelten Synchrongeneratoren betrieben worden, nimmt nun in einigen elektrischen Versorgungsnetzen der Anteil anderer Einspeiser zu. Insbesondere nimmt der Anteil regenerativer Energiequellen zu, die üblicherweise als umrichtergeführte Einspeiser ausgebildet sind. Sie speisen also mittels Umrichter oder Wechselrichter in das elektrische Versorgungsnetz ein. Dadurch kann sich auch das grundsätzliche Verhalten des elektrischen Versorgungsnetzes ändern.

Beispielsweise besteht bei elektrischen Versorgungsnetzen, die überwiegend oder ausschließlich durch direkt gekoppelte Synchrongeneratoren betrieben werden, ein fester Zusammenhang zwischen einem Leistungsdefizit und einer Frequenzänderung. Überhaupt können viele Reaktionen des elektrischen Versorgungsnetzes auf das physikalische Verhalten direktgekoppelter Synchrongeneratoren zurückgeführt werden und auch gut vorhergesagt werden. Das Verhalten eines solchen elektrischen Versorgungsnetzes ist dabei gut bekannt.

Basierend auf solchen bekannten Netzcharakteristika können entsprechende Strategien vorgeschlagen werden, wie Einspeiser auf Veränderungen des elektrischen Versorgungsnetzes reagieren. Insbesondere sind Spannungsabhängige Phasenwinkelregelungen und frequenzabhängige Leistungsregelungen bekannt, die gewisse Charakteristika des elektrischen Versorgungsnetzes voraussetzen.

Mit zunehmenden Anteil umrichtergeführter Einspeiser, die synonym auch als umrichtergesteuerte Einspeiser bezeichnet werden können, können sich solche Zusammenhänge ändern, was auch Einfluss auf die gewählten Strategien haben kann. Insbesondere kann eine durch direkt gekoppelte Synchrongeneratoren bekannte Stabilisierung abnehmen oder sogar wegfallen. Um solchen Effekten entgegenzuwirken, können dafür umrichtergeführte Einspeiser entsprechend so programmiert werden, dass sie bestimmte Verhaltensweisen aufweisen. Das müssen nicht unbedingt die von den direkt gekoppelten Synchrongeneratoren bekannten Verhaltensweisen sein. Auch kann nicht jegliche Verhaltensweise programmiert werden und so ist es kaum möglich, durch umrichtergeführte Einspeiser ein identisches Verhalten von direktgekoppelten Synchrongeneratoren nachzubilden.

Es kommt dazu, dass Windenergieanlagen bzw. Windparks als auch Photovoltaikanlagen, die einen Großteil solcher umrichtergeführter Einspeiser ausmachen, oftmals fluktuierende Energiequellen haben. Je nach vorhandener Solarleistung und/oder vorhandener Windleistung kann von umrichtergeführten Einspeisern unterschiedlich viel Leistung bereitgestellt werden. Das kann auch die generelle Charakteristik des elektrischen Versorgungsnetzes verändern. Ist also beispielsweise ein großer Anteil Windenergieanlagen vorhanden, gemessen an der installierten Leistung, so kann deren Verhalten das Verhalten des elektrischen Versorgungsnetzes dominieren, wenn viel Wind vorhanden ist. Ist aber wenig Wind vorhanden, kann wiederrum ein Anteil direktgekoppelter Synchrongeneratoren dominant sein, sodass dann eine andere Netzcharakteristik vorliegt.

Es kommt hinzu, dass umrichtergeführte Einspeiser zudem häufig stärker verteilt sind, als Großkraftwerke mit direktgekoppelten Synchrongeneratoren.

Der vorliegenden Erfindung liegt somit die Aufgabe zugrunde, wenigstens eins der vorgenannten Probleme zu adressieren. Insbesondere soll eine Lösung gefunden werden, ein elektrisches Versorgungsnetz unterschiedlicher und/oder wechselnder Netzcharakteristika möglichst stabil zu führen. Insbesondere soll zu bisher bekannten Lösungen eine alternative Lösung vorgeschlagen werden.

Erfindungsgemäß wird ein Verfahren zum Austauschen elektrischer Leistung gemäß Anspruch 1 vorgeschlagen. Demnach betrifft das Verfahren das Austauschen elektrischer Leistung zwischen einer Einspeiseeinheit und einem elektrischen Versorgungsnetz an einem Netzanschlusspunkt. Die Einspeiseeinheit ist insbesondere als Windenergieanlage oder als Windpark mit mehreren Windenergieanlagen ausgebildet. Im Wesentlichen wird das Einspeisen elektrischer Leistung in das elektrische Versorgungsnetz vorgeschlagen, es kommt aber auch in Betracht, dass die Einspeiseeinheit selbst elektrische Leistung aus dem elektrischen Versorgungsnetz entnimmt, insbesondere dann, wenn dies zur Stabilisierung des elektrischen Versorgungsnetzes vorgeschlagen wird. Daher betrifft das vorgeschlagene Verfahren den Austausch elektrischer Leistung zwischen dem elektrischen Versorgungsnetz, was somit das Übertragen elektrischer Leistung in beide Richtungen umfasst.

Als Einspeiseeinheit wird insbesondere eine Windenergieanlage oder ein Windpark, der mehrere Windenergieanlagen aufweist, vorgeschlagen. Eine Windenergieanlage bzw. ein Windpark speisen mit Hilfe eines Umrichters oder Wechselrichters in das elektrische Versorgungsnetz ein. Und ein solches Einspeisen wird als umrichtergeführtes Einspeisen bezeichnet. Daher wird vorzugsweise vorgeschlagen, dass die Einspeiseeinheiten umrichtergeführte Einspeiseeinheiten sind. Das trifft auch für die meisten Windenergieanlagen bzw. Windparks zu.

Das Verfahren geht von einem elektrischen Versorgungsnetz aus, das eine veränderliche Netzspannung und eine veränderliche Netzfrequenz aufweist, und durch eine Nennspannung und durch eine Nennfrequenz gekennzeichnet ist. Das Austauschen elektrischer Leistung umfasst das Austauschen von Wirkleistung und das Austauschen von Blindleistung. Es muss aber nicht unbedingt immer Wirkleistung und Blindleistung zugleich ausgetauscht werden.

Es wird weiter vorgeschlagen, dass das Austauschen der Wirkleistung in Abhängigkeit von einer frequenz- und spannungsabhängigen Wirkleistungssteuerfunktion gesteuert wird. Die Wirkleistungssteuerfunktion gibt eine zusätzlich zu einem Wirkleistungsgrundwert einzuspeisende Zusatzwirkleistung in Abhängigkeit von der erfassten Netzfrequenz und in Abhängigkeit von der erfassten Netzspannung vor. Somit ist hier eine Doppelabhängigkeit vorgesehen, demnach die Zusatzwirkleistung in Abhängigkeit von der erfassten Netzfrequenz und in Abhängigkeit von der erfassten Netzspannung vorgegeben wird.

Wenn die Einspeiseeinheit eine Windenergieanlage oder ein Windpark ist, kann diese verfügbare Leistung insbesondere vom vorhandenen Wind abhängen. Davon abhängig kann besonders eine windabhängige Grundleistung oder andere Grundleistung eingespeist werden, nämlich in Höhe des Wirkleistungsgrundwertes. Diese Grundleistung bzw. dieser Wirkleistungsgrundwert kann aber auch geringer sein als die zur Einspeisung vorhandene Leistung. Die Wirkleistungssteuerfunktion ermittelt somit als Zusatzwirkleistung einen Steuerleistungswert, um den die eingespeiste Grundleistung bzw. der Wirkleistungsgrundwert verändert wird. Besonders kann ein solcher Steuerleistungswert den Wert 0 aufweisen, wenn die erfasste Netzfrequenz der Nennfrequenz und die erfasste Netzspannung der Nennspannung entspricht.

Eine solche Situation kann insoweit einen Ausgangspunkt für die Wirkleistungssteuerfunktion bilden. Mit zunehmender Frequenz kann besonders der Steuerleistungswert und damit die einzuspeisende Zusatzwirkleistung weiter verringert werden. Mit zunehmender Spannung kann zudem die einzuspeisende Zusatzwirkleistung und damit der Steuerleistungswert weiter erhöht werden, um zwei bevorzugte Varianten zu nennen. Vereinfachend kann auf die einzuspeisende Zusatzwirkleistung auch als einzuspeisende Wirkleistung verwiesen werden, was nicht ausschließen soll, dass noch ein Wirkleistungsgrundwert hinzukommen kann.

Die Doppelabhängigkeit der Zusatzwirkleistung in Abhängigkeit von der Netzfrequenz und der Netzspannung kann durch zwei separate Funktionen realisiert werden, die jeweils auch als Kennlinie darstellbar sind. Eine dieser Funktionen bzw. Kennlinien kann einen ersten Steuerleistungsteilwert in Abhängigkeit von der erfassten Netzfrequenz vorgeben und die andere Funktion bzw. Kennlinie kann einen zweiten Steuerleistungsteilwert in Abhängigkeit von der erfassten Netzspannung vorgeben. Diese beiden Steuerleistungsteilwerte können dann zu dem Steuerleistungswert aufaddiert werden.

Es kommt aber auch eine Doppelabhängigkeit in Betracht, die durch eine dreidimensionale Kennfläche vorgegeben werden kann. Eine solche dreidimensionale Kennfläche gibt also jeweils für ein Wertpaar für die erfasste Netzfrequenz und die erfasste Netzspannung einen zugehörigen Steuerleistungswert vor. Eine solche Kennfläche kann gegebenenfalls auch als von zwei Variablen abhängige Funktion vorgegeben werden.

Diese Doppelabhängigkeit der Wirkleistungssteuerfunktion von der erfassten Netzfrequenz und von der erfassten Netzspannung wird besonders im Hinblick darauf vorgeschlagen, dass das Verfahren an unterschiedliche elektrische Versorgungsnetze bzw. an ein sich veränderndes oder veränderbares elektrisches Versorgungsnetz anpassbar ist. Besonders wurde erkannt, dass in einem konventionellen elektrischen Versorgungsnetz, in dem nur direktgekoppelte Synchrongeneratoren in das elektrische Versorgungsnetz einspeisen, zumindest dominant sind, eine starke Abhängigkeit zwischen einem Leistungsbedarf und einer Netzfrequenz besteht. Eine Änderung der Netzfrequenz ist in einem solchen elektrischen Versorgungsnetz ein Hinweis auf ein Leistungsüber- oder -unterangebot. Eine Abhängigkeit zwischen der Leistung und der Netzspannung fällt eher gering aus.

Bei einem elektrischen Versorgungsnetz, in das überwiegend umrichtergeführte Einspeiseeinheiten einspeisen, kann hingegen eine stärkere Abhängigkeit zwischen Wirkleistung und Netzspannung bestehen, während der Zusammenhang zwischen eingespeister Wirkleistung und Netzfrequenz im Vergleich zu konventionellen elektrischen Versorgungsnetzen abgenommen hat. Aus diesem Grunde wird diese Doppelabhängigkeit vorgeschlagen, um beide Aspekte berücksichtigen zu können.

Außerdem wird vorgesehen, dass das Austauschen der Blindleistung in Abhängigkeit von einer frequenz- und spannungsabhängigen Blindleistungssteuerfunktion gesteuert wird, wobei die Blindleistungssteuerfunktion eine zusätzlich zu einem Blindleistungsgrundwert einzuspeisende Zusatzblindleistung in Abhängigkeit von der erfassten Netzfrequenz und in Abhängigkeit von der erfassten Netzspannung vorgibt. Auch hier kann die Blindleistungssteuerfunktion durch zwei einzelne Steuerfunktionen, insbesondere Kennlinien oder durch eine Kennfläche vorgegeben werden. Die Erläuterungen zur Wirkleistungssteuerfunktion sind hier sinngemäß anzuwenden. Vereinfachend kann auf die einzuspeisende Zusatzblindleistung auch als einzuspeisende Blindleistung verwiesen werden, was nicht ausschließen soll, dass noch ein Blindleistungsgrundwert hinzukommen kann.

Für das Einspeisen bzw. Austauschen von Blindleistung muss kein Blindleistungsgrundwert vorhanden, der eine dauerhafte einzuspeisende Blindleistung beschreiben könnte. Insoweit kommt hier in Betracht, dass die einzuspeisende bzw. auszutauschende Blindleistung bei erfasster Nennfrequenz und erfasster Nennspannung den Wert 0 beträgt. Steigt die Netzspannung an, kann vorgesehen sein, die eingespeiste Blindleistung zu reduzieren, in dem Fall dann insbesondere auch auf Werte unter 0. Steigt die Frequenz an, kann ebenfalls vorgesehen sein, die Blindleistung zu reduzieren.

Dennoch ist es aber möglich, dass unabhängig von der erfassten Netzfrequenz und der erfassten Netzspannung ein Blindleistungsgrundwert zur Einspeisung vorhanden ist. Ein solcher Blindleistungsgrundwert kann besonders durch einen Netzbetreiber vorgegeben werden.

Auch hier wird die Doppelabhängigkeit der auszutauschenden Blindleistung im Hinblick darauf vorgesehen, dass das vorgeschlagene Verfahren für unterschiedliche elektrische Versorgungsnetze anwendbar sein soll bzw. sich auf sich ändernde elektrische Versorgungsnetze einstellen können soll.

Deswegen wird weiter vorgeschlagen, dass die Wirkleistungssteuerfunktion und die Blindleistungssteuerfunktion jeweils eine Steuerfunktion bilden und in Abhängigkeit von wenigstens einer Netzcharakteristik und/oder wenigstens einem Netzzustand des elektrischen Versorgungsnetzes eingestellt werden.

Eine vergleichsweise einfache Möglichkeit der Einstellung besteht darin, dass für die Wirkleistungssteuerfunktion und die Blindleistungssteuerfunktion jeweils ein Vorfaktor vorgesehen ist, der in Abhängigkeit von wenigstens einer Netzcharakteristik und/oder wenigstens einem Netzzustand verändert wird. Diese Veränderungen können für die Wirkleistungssteuerfunktion und die Blindleistungssteuerfunktion unterschiedlich sein, insbesondere können sie auch gegenläufig sein.

Besonders kommt aber auch in Betracht, dass jeweils eine Gewichtung vorgesehen ist für die Abhängigkeit von der erfassten Netzfrequenz einerseits und für die Abhängigkeit von der erfassten Netzspannung andererseits. Dies kann für beide Steuerfunktonen, also für die Wirkleistungssteuerfunktion und die Blindleistungssteuerfunktion vorgesehen sein. Somit können also vier Gewichtungen vorgesehen sein. Jede Gewichtung kann als ein Gewichtungsfaktor, aber auch als eine komplexere Gewichtungsfunktion vorgesehen sein. Dadurch kann beispielsweise erreicht werden, dass im Falle eines konventionellen elektrischen Versorgungsnetzes die einzuspeisende Wirkleistung stärker von der erfassten Netzfrequenz abhängt, wohingegen die einzuspeisende Blindleistung stärker von der erfassten Netzspannung abhängt. Das Verhalten kann dann, wenn kein konventionelles elektrisches Versorgungsnetz vorliegt, bei dem insbesondere umrichtergeführte Einspeiseeinheiten dominant sind, zu einem Verhalten gewechselt werden, bei dem die einzuspeisende Wirkleistung stärker von der erfassten Netzspannung und die einzuspeisende Blindleistung stärker von der erfassten Netzfrequenz abhängt, um ein anschauliches Beispiel zu nennen.

Das Einstellen der Wirkleistungssteuerfunktion und/oder der Blindleistungssteuerfunktion kann aber auch dadurch erfolgen, dass unterschiedliche Steuerfunktionen hinterlegt sind, aus denen in Abhängigkeit von wenigstens einer Netzcharakteristik und/oder wenigstens einem Netzzustand ausgewählt wird.

Das Einstellen sowohl der Wirkleistungssteuerfunktion als auch der Blindleistungssteuerfunktion kann bedeuten, dass einzelne Kennlinien oder Kennflächen verändert werden.

Wird jeweils für die Wirkleistungssteuerung und die Blindleistungssteuerung eine Kennfläche verwendet, oder ist die Wirkleistungssteuerfunktion bzw. die Blindleistungssteuerfunktion als Kennfläche darstellbar, kann jeweils durch das Einstellen ein Gradient jeder Kennfläche nach Betrag und Richtung verändert werden. Insbesondere kann jede Kennfläche ein Kennflächenmittelpunkt aufweisen, der den Punkt in der Kennfläche bezeichnet, bei dem Nennfrequenz und Nennspannung vorliegen. Für diesen Kennflächenmittelpunkt wird vorgeschlagen, dass sein Gradient nach Betrag und Phase eingestellt wird, wenn die betreffende Wirkleistungssteuerfunktion bzw. Blindleistungssteuerfunktion eingestellt wird. Der Gradient des Kennflächenmittelpunktes kann als Mittelpunktgradient bezeichnet werden. Insbesondere wird vorgeschlagen, dass der Mittelpunktgradient in Abhängigkeit von wenigstens einer Netzcharakteristik und/oder in Abhängigkeit von wenigstens einem Netzzustand eingestellt wird.

Hier wurde besonders erkannt, dass eine Veränderung des elektrischen Versorgungsnetzes unterschiedliche Auswirkungen auf eine Frequenzabhängigkeit einerseits und eine Spannungsabhängigkeit andererseits haben kann. Die Kennfläche verändert seine Steigungen dann nicht nur in der Amplitude, sondern auch in der Richtung Das spiegelt sich besonders in einer Veränderung des Mittelpunktgradienten nach Betrag und Richtung wider.

Eine Netzcharakteristik beschreibt eine Eigenschaft des elektrischen Versorgungsnetzes die das elektrische Versorgungsnetz dauerhaft charakterisiert. Eine Netzcharakteristik ist eine dauerhafte Eigenschaft, die durch den Aufbau des elektrischen Versorgungsnetzes, einschließlich angeschlossener Einspeiseeinheiten, Leitungseigenschaften und Transformatoren gekennzeichnet oder gegeben sein kann.

Ein Netzzustand ist eine flüchtige Eigenschaft des elektrischen Versorgungsnetzes. Hierzu gehören insbesondere Netzfehler, Schalterstellungen im elektrischen Versorgungsnetz und Leistungssituationen im elektrischen Versorgungsnetz, das auch vereinfachende und synonym als Netz bezeichnet werden kann. Leistungssituationen beschreiben, wie viel Leistung eingespeist und entnommen wird und das kann beinhalten, wo und/oder durch was für Einspeiseeinheiten die elektrische Leistung eingespeist wird. Der Netzzustand kann sich ständig ändern und er kann auch beinhalten oder dadurch gekennzeichnet sein, dass kein Netzfehler vorliegt.

Es wird somit vorgeschlagen, dass jede der vier Steuerfunktionen in Abhängigkeit von einer Netzcharakteristik und/oder einem Netzzustand eingestellt wird. Die Steuerfunktionen sind also nicht fest vorgegeben, sondern berücksichtigen die jeweiligen Eigenheiten des elektrischen Versorgungsnetzes. Vorzugsweise werden wenigstens eine Netzcharakteristik und wenigstens ein Netzzustand zugleich berücksichtigt.

Eine Berücksichtigung, sei es nun der Netzcharakteristik oder des Netzzustandes, erfolgt so dass die jeweilige Steuerfunktion eingestellt wird. Jede Steuerfunktion stellt einen Zusammenhang zwischen einer Eingangsgröße, nämlich Netzfrequenz oder Netzspannung, und einer Ausgangsgröße, nämlich einzuspeisende Wirkleistung und einzuspeisende Blindleistung her. Dieser Zusammenhang kann durch eine Kennlinie oder anderweitig vorgegeben werden. Wird der Zusammenhang durch eine funktionale Beschreibung vorgegeben, kann eine solche funktionale Beschreibung auch durch eine Kennlinie wiedergegeben dargestellt werden.

Gemäß einem Aspekt wird vorgeschlagen, dass ein statischer Umrichteranteil eine Netzcharakteristik bildet, wobei ein statischer Umrichteranteil ein Verhältnis beschreibt von durch umrichtergeführte Einspeiseeinheiten in das elektrische Versorgungsnetz oder einen Netzabschnitt davon einspeisbarer Leistung zu insgesamt durch alle Einspeiseeinheiten in das elektrische Versorgungsnetz oder den Netzabschnitt einspeisbarer Leistung. Insbesondere ist die einspeisbare Leistung jeweils die Nennleistung oder installierte Leistung der jeweiligen Einspeiseeinheit. Insoweit beschreibt der statische Umrichteranteil ein Verhältnis zwischen der Summe der installierten Leistungen oder Nennleistungen der angeschlossenen umrichtergeführten Einspeiseeinheiten zu der Summe der installierten Leistungen bzw. Nennleistungen aller angeschlossener Einspeiseeinheiten.

Ein Netzabschnitt ist insbesondere ein Teil eines elektrischen Versorgungsnetzes, mit einer installierten Leistung von wenigstens 1GW. Ein solcher Netzabschnitt kann durch Koppelstellen definiert sein, über die er mit dem Rest des elektrischen Versorgungsnetzes verbunden ist. Solche Koppelstellen können insbesondere Netztrennschalter und/oder Transformatoren zur Kopplung aufweisen.

Der statische Umrichteranteil bildet somit eine Netzcharakteristik, denn er betrifft die installierten Leistungen und damit keine flüchtige Zustandsgröße. Die aktuell eingespeisten Leistungen können variieren, bei Windenergieanlagen bzw. Windparks besonders in Abhängigkeit von der vorhandenen Windsituation.

Der statische Umrichteranteil lässt aber besonders Schlüsse zu, wie schnell und im welchen Umfang Leistungsänderungen, besonders Wirkleistungsänderungen und Blindleistungsänderungen möglich sind. Selbst dann, wenn solche umrichtergeführten Einspeiseeinheiten keine Wirkleistung einspeisen, weil im Falle von Windenergieanlagen oder Windparks beispielsweise nicht ausreichend Wind vorhanden ist, können solche umrichtergeführten Einspeiseeinheiten dennoch sehr schnell und sehr gut steuerbar Leistung abbauen, nämlich elektrische Leistung aus dem elektrischen Versorgungsnetz aufnehmen. Eine solche Eigenschaft kann besonders dann von Relevanz sein, wenn ein großer elektrischer Verbraucher sich plötzlich vom elektrischen Versorgungsnetz trennt. Das kann beispielsweise dann erfolgen, wenn ein Schutzschalter anspricht, über den besagter Verbraucher mit dem elektrischen Versorgungsnetz gekoppelt ist. In einem solchen Fall, der sehr relevant und gefährlich sein kann, ist dann plötzlich zu viel Leistung im elektrischen Versorgungsnetz verfügbar. Darauf soll das Verfahren möglichst gut reagieren können.

Ist der statische Umrichteranteil hoch, bedeutet das auch, dass der Anteil konventioneller Einspeiser niedrig ist. Besonders diese konventionellen Einspeiser können Ihre eingespeiste Leistung nur vergleichsweise langsam verringern bzw. sie können sie meist nur verbunden mit einer Frequenzerhöhung verringern. Entsprechend sollte das Verfahren auf eine solche Frequenzerhöhung durch schnelle Leistungsreduzierung, einschließlich Leistungsentnahme aus dem elektrischen Versorgungsnetz, reagieren können, wenn der Anteil konventioneller Einspeiseeinheiten groß ist. Ist der Anteil aber gering, ist im Fall des beschriebenen Abtrennens eines großen Verbrauchers mit einer anderen Reaktion des elektrischen Versorgungsnetzes zu rechnen, sodass auch das vorgeschlagene Verfahren sich anders verhalten sollte. All dies wird durch die entsprechende Einstellbarkeit der Wirkleistungssteuerfunktion und der Blindleistungssteuerfunktion berücksichtigt.

Ein R/X-Verhältnis am Netzanschlusspunkt kann ebenfalls eine Netzcharakteristik bilden. Ein solches R/X-Verhältnis ist somit ein Verhältnis des Wirkwiderstandes R zum Blindwiderstand X. Dieses R/X-Verhältnis am Netzanschlusspunkt charakterisiert somit das elektrische Versorgungsnetz quasi aus Sicht des Netzanschlusspunktes. Diese Größe ist eine rechnerische Charakterisierung des elektrischen Versorgungsnetzes an diesem Netzanschlusspunkt, kann aber anschaulich erläutert werden. Die Impedanz am Netzanschlusspunkt lässt sich berechnen als Quotient einer Leerlaufspannung am Netzanschlusspunkt zu einem Kurzschlussstrom am Netzanschlusspunkt. Die Leerlaufspannung ist insoweit die Spannung, die sich nach Betrag und Phase einstellt, wenn kein Strom in das elektrische Versorgungsnetz eingespeist wird. Der Kurzschlussstrom ist derjenige Strom, den das elektrische Versorgungsnetz zum Netzanschlusspunkt liefert, wenn dort ein Kurzschluss ist, wenn also die Einspeiseeinheit in diesem Moment nicht angeschlossen ist. Die Impedanz Z ist somit durch den Wirkwiderstand und den Blindwiderstand gekennzeichnet bzw. darstellbar. Hier kommt es nicht auf die absoluten Werte an, aber auf das Verhältnis von Wirkwiderstand zu Blindwiderstand. Je kleiner das Verhältnis wieder ist, umso größer ist die Phasenverschiebung an dieser Netzimpedanz.

Diese Netzimpedanz ist somit ebenfalls eine Rechengröße, sie kann aber anschaulich erklärt werden, als die Impedanz zwischen dem Netzanschlusspunkt und einer idealisierten Spannungsquelle im elektrischen Versorgungsnetz.

Die Impedanz kann übrigens auch bestimmt werden, ohne dass ein Kurzschluss am Netzanschlusspunkt durchgeführt werden muss. Sie lässt sich auch aus Stromänderungen und resultierenden Spannungsänderungen jeweils am Netzanschlusspunkt ermitteln.

Auch dieses R/X-Verhältnis ist eine Netzcharakteristik, denn es ist keine flüchtige Größe und wird besonders durch physikalische Eigenschaften elektrischer Leitungen im elektrischen Versorgungsnetz und dabei natürlich zum Netzanschlusspunkt charakterisiert.

Dieses Verhältnis ist als wichtig erkannt worden, um die Wirkleistungssteuerfunktion und die Blindleistungssteuerfunktion einzustellen, denn es wurde erkannt, dass davon abhängen kann, wie wirkungsvoll die Einspeiseeinheit an dem Netzanschlusspunkt auf das elektrische Versorgungsnetz einwirken kann.

Gemäß einem Aspekt wird vorgeschlagen, dass ein Netzfehler einen Netzzustand bildet. Ein Netzfehler kann insbesondere ein Kurzschluss und/oder ein Spannungseinbruch im elektrischen Versorgungsnetz sein. Ein Spannungseinbruch kann die Folge eines Kurzschlusses im elektrischen Versorgungsnetz sein, kann aber auch andere Ursachen haben wie das Abschalten von Einspeiseeinheiten oder das Abtrennen eines Netzabschnitts.

Als Spannungseinbruch kommt ein Einbruch auf eine geringe Spannung, insbesondere im Bereich unterhalb von 20 % Nennspannung in Betracht. Hier wurde besonders erkannt, dass im Fall eines Netzfehlers Einspeiseeinheiten spezielle Strategien vorsehen können, wie sie auf unterschiedliche Netzfehler reagieren. Teilweise gibt es auch Vorschriften, die einen Rahmen vorgeben, wie sich Einspeiseeinheiten bei bestimmten Netzfehlern zu verhalten haben.

Es wurde somit erkannt, dass das Ergebnis eines Netzfehlers sein kann, dass sich das elektrische Versorgungsnetz anders verhält, als wenn kein oder ein anderer Netzfehler vorliegt und genau darauf kann sich das vorgeschlagene Verfahren einstellen, wenn die Steuerfunktion in Abhängigkeit von einem Netzfehler eingestellt werden.

Liegt ein beispielhaft genannter Spannungseinbruch vor, so kann das dazu führen, dass grundsätzlich weniger Leistung in das elektrische Versorgungsnetz eingespeist wird. Es kann dann generell vorgesehen sein, möglichst viel Leistung einzuspeisen, nämlich Wirkleistung, um ein solches Defizit zumindest teilweise auszugleichen. Sowohl eine frequenzabhängige als auch eine spannungsabhängige Wirkleistungseinspeisung kann dann generell so verändert werden, dass der einzuspeisende Wirkleistungswert auf einem hohen Niveau liegt. Insbesondere kann bei einem Spannungseinbruch vorgeschlagen werden, dass ein frequenzabhängiger Wirkleistungsanteil weniger stark bei einer Überfrequenz reduziert wird, weil in einem solchen Fehlerfall eine andere Abhängigkeit zwischen Leistungsbedarf oder Überschuss und Frequenz vorliegt, als dies in einer fehlerlosen Situation der Fall wäre.

Dies ist nur ein Beispiel und es kommen verschiedene Möglichkeiten in Betracht die Steuerfunktionen in Abhängigkeit von einem Fehlerfall einzustellen. Dazu kann für unterschiedliche Fehlerfälle ermittelt werden, wie sich die Einspeiseeinheiten verhalten werden, und darauf kann das Einstellen der Steuerfunktionen angepasst werden.

Gemäß einem Aspekt wird vorgeschlagen, dass Schalterstellungen zum Einstellen oder Umstellen einer Netztopologie einen Netzzustand bilden. Dies kann damit kombiniert werden, dass ein Netzfehler einen Netzzustand bildet. So kann jeder Netzfehler einen Netzzustand bilden und jede Schalterstellung ebenfalls einen Netzzustand. Das elektrische Versorgungsnetz weist dann mehrere Netzzustände auf, die berücksichtigt werden.

Solche Schalterstellungen betreffen somit Netztrennschalter im elektrischen Versorgungsnetz, die geöffnet oder geschlossen sein können. Durch öffnen solcher Netztrennschalter können Netzabschnitte für Übertragungsleitungen, abgetrennt werden. Das kann beispielsweise für Wartungs- oder Reparaturarbeiten vorgesehen sein, um dadurch entsprechende Netzabschnitte spannungsfrei zu schalten. Es kommt aber auch in Betracht, dass gezielte Leistungsflüsse verändert werden sollen.

Durch das Verändern solcher Schalterstellungen kann sich somit kurzfristig das Verhalten des elektrischen Versorgungsnetzes ändern. Beispielsweise können Übertragungswege zwischen Einspeiseeinheiten und Verbrauchern verkürzt oder verlängert werden. Das kann entsprechend Einfluss auf einen Spannungsabfall zwischen diesen Einspeiseeinheiten und den genannten Verbrauchern haben. Entsprechend wird vorgeschlagen, um bei diesem Beispiel zu bleiben, eine spannungsabhängige Wirkleistungseinspeisung als auch Blindleistungseinspeisung entsprechend zu verändern.

Es kommt aber auch in Betracht, dass durch eine solche Netztopologieumstellung das elektrische Versorgungsnetz mehr oder weniger anfällig für Spannungs- oder Leistungsschwankungen im elektrischen Versorgungsnetz wird. Führt also eine Umstellung der Netztopologie zu einer Schwächung der Stabilität des elektrischen Versorgungsnetzes, so kann dies durch ein entsprechendes Einstellen der Steuerfunktionen ausgeglichen werden. Führt eine solche Umstellung einer Netztopologie zu einem elektrischen Versorgungsnetz, das stärker zum Schwingen neigt, insbesondere zu Leistungsendlungen neigt, kann dem dadurch entgegengewirkt werden, dass die Steuerfunktionen so eingestellt werden, dass sie eine stärker bedämpfende Wirkung entfalten, um ein weiteres Beispiel zu nennen.

Gemäß einem Aspekt wird vorgeschlagen, dass ein dynamischer Umrichteranteil einen Netzzustand bildet, wobei ein dynamischer Umrichteranteil ein Verhältnis beschreibt von durch umrichtergeführte Einspeiser in das elektrische Versorgungsnetz oder einen Netzabschnitt davon eingespeister Leistung zu insgesamt durch alle Einspeiseeinheiten in das elektrische Versorgungsnetz oder den Netzabschnitt eingespeister Leistung.

Ein dynamischer Umrichteranteil unterscheidet sich somit von einem statischen Umrichteranteil. Bei dem dynamischen Umrichteranteil wird die tatsächlich aktuell eingespeiste Leistung betrachtet, die sich aber stetig ändern kann, sodass der dynamische Umrichteranteil einen Netzzustand bildet, wohingegen derstatische Umrichteranteil eine Netzcharakteristik bildet.

Von dem dynamischen Umrichteranteil lässt sich unter anderem ableiten, wie das elektrische Versorgungsnetz auf einen schwankenden Leistungsbedarf der angeschlossenen Verbraucher reagieren würde. Ist der dynamische Umrichteranteil klein, wird also die meiste Leistung durch konventionelle Einspeiseeinheiten eingespeist, ist von einem starken Zusammenhang zwischen schwankenden Leistungsbedarf und der Netzfrequenz auszugehen. Wird aber viel, insbesondere überwiegend Leistung durch umrichtergeführte Einspeiseeinheiten eingespeist, ergäbe sich eine andere Reaktion des elektrischen Versorgungsnetzes auf schwankenden Leistungsbedarf. Besonders ist eine stärkere Abhängigkeit der Netzspannung vom schwankenden Leistungsbedarf zu erwarten. Entsprechend können die Steuerfunktionen eingestellt werden, um diesen Unterschieden gerecht zu werden.

Gemäß einem Aspekt wird vorgeschlagen, dass eine der beiden Steuerfunktionen, beide Steuerfunktionen oder, wenn wenigstens eine der beiden Steuerfunktionen aus mehreren Teilsteuerfunktionen zusammengesetzt ist, eine oder mehrere dieser Teilsteuerfunktionen jeweils dadurch verändert werden, dass sie jeweils aus mehreren vorbestimmten Auswahlsteuerfunktionen ausgewählt werden. Insbesondere wird vorgeschlagen, dass sie dabei jeweils aus einer Kurvenschar oder einer Kennflächenschar ausgewählt werden.

Hier liegt besonders der Gedanke zu Grunde, dass für unterschiedliche Netzzustände und/oder Netzcharakteristika geeignete Steuerfunktionen vorbestimmt sein können. Hier kommt auch in Betracht, dass solche Steuerfunktionen bereits in Simulationen für die entsprechenden Netzzustände oder Netzcharakteristika, oder zumindest für ähnliche Netzzustände oder Netzcharakteristika getestet sind. Dabei können sie auch weiter angepasst werden, um sie noch weiter zu verbessern. In Frage kommende Netzzustände und/oder Netzcharakteristika können dafür klassifiziert oder gruppiert werden, um eindeutig wenigstens eine entsprechende Auswahlsteuerfunktion zuordnen zu können.

Es kommt aber auch in Betracht, dass für einen konkreten Netzzustand und/oder eine konkrete Netzcharakteristik eine bzw. jeweils eine Auswahlsteuerfunktion ausgewählt wird, die zu einem ähnlichen Netzzustand bzw. einer ähnlichen Netzcharakteristik passt und dann durch Extrapolation oder Interpolation angepasst wird. Im Falle der Interpolation werden entsprechend jeweils zwei Auswahlsteuerfunktionen ausgewählt. Besonders gibt es sowohl Netzzustände als auch Netzcharakteristika, die vom Wert her kontinuierlich veränderbar sind. Das trifft besonders für den dynamischen Umrichteranteil und den statischen Umrichteranteil zu, die jeweils als Prozentwerte vorgesehen sein können. Hier können beispielsweise Auswahlsteuerfunktionen für dynamische Umrichteranteile und statische Umrichteranteile jeweils in 10 %-Schritten hinterlegt sein.

Da die Steuerfunktionen, also die Wirkleistungssteuerfunktion und die Blindleistungssteuerfunktion jeweils eine Doppelabhängigkeit haben, gibt es verschiedene Möglichkeiten diese zu realisieren. Eine Möglichkeit besteht darin, dass jede Steuerfunktion sich aus zwei Teilsteuerfunktionen zusammensetzt. So kann sich die Wirkleistungssteuerfunktion aus zwei Teilsteuerfunktionen zusammensetzen, von denen eine die einzuspeisende Wirkleistung in Abhängigkeit von der erfassten Netzfrequenz vorgibt und die andere die einzuspeisende Wirkleistung in Abhängigkeit von der erfassten Netzspannung vorgibt. Die Wirkleistungssteuerfunktion kann dann die Summe beider Teilsteuerfunktionen sein.

Auch hier kann dann vorgeschlagen werden, dass die Teilsteuerfunktionen jeweils aus mehreren vorbestimmten Auswahlsteuerfunktionen ausgewählt werden.

In diesem Fall kann dann auch eine Auswahl aus einer Kurvenschar erfolgen. Die Auswahlsteuerfunktion, die eine Teilsteuerfunktion bilden kann, kann insoweit jeweils eine als Kurve darstellbare Kennlinie vorgeben. Mehrere Auswahlsteuerfunktionen führen somit zu mehren Kennlinien, also mehreren Kurven und diese Kurven bilden eine Kurvenschar, aus der ausgewählt werden kann.

Besonders dann, wenn die Steuerfunktion, also die Wirkleistungssteuerfunktion oder die Blindleistungssteuerfunktion ihre Abhängigkeit in einer Funktion vereinen, kann häufig eine solche Steuerfunktion als Kennfläche dargestellt werden. So kann beispielsweise im Falle der Wirkleistungssteuerfunktion eine Fläche aufgespannt werden, die die einzuspeisenden Wirkleistungen jeweils in Abhängigkeit von erfasster Netzfrequenz und erfasster Netzspannung darstellen. Es ergibt sich also eine dreidimensionale Darstellung, in der in jeweils einer Dimension die erfasste Netzfrequenz, die erfasste Netzspannung und die resultierende einzuspeisende Wirkleistung abgetragen sind.

Gleiches kann auch für die Blindleistungssteuerfunktion vorgesehen sein bzw. anwendbar sein, bei der dann statt der einzustellenden Wirkleistung die einzustellende Blindleistung an einer Achse abgetragen wird. Entsprechend ergibt sich jeweils diese Ebene als Kennfläche. Jede der hierfür vorzubestimmenden Auswahlsteuerfunktionen hat dann ebenfalls eine doppelte Abhängigkeit und ist als Kennfläche darstellbar. Dadurch ergeben sich mehrere Kennflächen die zusammen eine Kennflächenschar bilden. Dadurch kann die jeweilige Steuerfunktion ausgewählt werden.

Gemäß einer Ausgestaltung wird vorgeschlagen, dass eine der beiden Steuerfunktionen oder wenigstens eine der Teilsteuerfunktionen in einer Parametrierung verändert werden. Besonders kann hier ein Vorfaktor verändert werden. Ein solcher Vorfaktor kann sowohl für eine einfachabhängige Funktion als auch für eine doppeltabhängige Funktion vorgegeben werden. Es können aber auch mehrere Parameter geändert werden. Besonders bei einer doppelten Abhängigkeit können für beide Abhängigkeiten jeweils ein Parameter vorgesehen sein. Setzt sich eine Steuerfunktion aus mehreren Teilsteuerfunktionen zusammen, kann für jede Teilsteuerfunktion die Veränderung einer Parametrierung vorgesehen sein. Auch da kommt in Betracht, dass jede Teilsteuerfunktion einen veränderlichen Faktor haben kann.

Gemäß einem Aspekt wird vorgeschlagen, dass eine der Steuerfunktionen, beide Steuerfunktionen oder eine oder mehrere der Teilsteuerfunktionen jeweils in einer Funktionscharakteristik verändert werden, wobei die Funktionscharakteristik eine Breite und/oder eine Position eines Todbandbereichs der Steuerfunktion bzw. der Teilsteuerfunktion sein kann. Außerdem oder alternativ kann die Charakteristik ein Grenzwert der Steuerfunktion bzw. der Teilsteuerfunktion sein und/oder eine Steigung oder Gradient der Steuerfunktion bzw. Teilsteuerfunktion.

Eine Steuerfunktion, gleiches gilt auch für eine Teilsteuerfunktion, kann durch mehrere Funktionscharakteristika gekennzeichnet sein. Solche Charakteristika können besonders die genannten Charakteristika eines Totbandbereichs, eines Grenzwertes und einer Steigung sein. Besonders zu diesen Charakteristika wurde erkannt, dass sie je nach wenigstens einem Netzzustand und/oder wenigstens einer Netzcharakteristik unterschiedliche Wirkungen entfalten.

Ein Totbandbereich der Steuerfunktion bzw. der Teilsteuerfunktion ist ein Bereich, in dem eine Veränderung der Eingangsgröße oder Eingangsgrößen den Funktionswert nicht verändert. Eine Kennlinie bzw. eine Kennfläche ist in diesem Bereich somit waagerecht. Insbesondere liegt ein solcher Totbandbereich bei Nennfrequenz und/oder Nennspannung vor. Variiert also die Netzfrequenz innerhalb des Totbandbereichs um die Nennfrequenz, hat dies für die Ausgangsgröße, also die einzustellende Wirkleistung oder einzustellende Blindleistung keine Auswirkung. Gleiches gilt für die Netzspannung, die in einem Totbandbereich um die Nennspannung variieren kann, ohne dass die betreffende einzustellende Wirkleistung oder Blindleistung verändert wird. Ein solcher Totbandbereich kann durch einen unteren Frequenzwert und einen oberen Frequenzwert definiert sein bzw. einen unteren Spannungswert und einen oberen Spannungswert. Diese Werte können in Abhängigkeit von wenigstens einem Netzzustand und/oder wenigstens einer Netzcharakteristik verändert werden, insbesondere so, dass ihr Abstand zu einander verändert wird. Es kommt aber auch in Betracht, dass sie so verändert werden, dass sich die Position des Totbandbereichs verschiebt, was mit oder ohne Veränderung der Breite des Totbandbereichs erfolgen kann.

Besonders wurde erkannt, dass bei einem kleinen statischen Umrichteranteil als auch bei einem kleinen dynamischen Umrichteranteil der Totbandbereich groß gewählt werden kann. Hier liegt nämlich die Erkenntnis zugrunde, dass dann die konventionellen Einspeiseeinheiten dominant sind und zu einer Stabilisierung des elektrischen Versorgungsnetzes führen, wobei kleinere Schwankungen sowohl der Netzfrequenz als auch der Netzspannung auftreten können. An solchen zu erwartenden und zulässigen Schwankungsbreiten kann der Totbandbereich angepasst werden und dadurch wird die Stabilisierung im Normalfall diesen konventionellen Einspeiseeinheiten überlassen.

Erst wenn ein solcher Totbandbereich überschritten wird, ist es sinnvoll, mittels umrichtergeführter Einspeiseeinheiten gemäß dem vorgeschlagenen Verfahren einzugreifen. Ist aber der statische Umrichteranteil oder der dynamische Umrichteranteil groß, liegt ein solches stabilisierendes Verhalten entsprechend weniger vor. Es kann dann schon bei geringen Abweichungen sinnvoll sein, stabilisierend einzugreifen, nämlich um die fehlende oder reduzierte stabilisierende Wirkung der konventionellen Einspeiser zu übernehmen. Daher wird besonders bei hohem statischen und/oder hohem dynamischen Umrichteranteil ein vergleichsweise geringer Totbandbereich vorgeschlagen.

Eine Verschiebung des Totbandbereichs kann dann sinnvoll sein, wenn die Netzfrequenz oder die Netzspannung auf einen anderen Wert als die Nennfrequenz bzw. Nennspannung gebracht werden soll. Eine Verschiebung des Totbandbereichs kommt auch dann in Betracht, wenn das elektrische Versorgungsnetz erkennbar und/oder vorhersehbar zu einem anderen Spannungswert als der Nennspannung strebt bzw. zu einem anderen Netzfrequenzwert als der Nennfrequenz strebt. Strebt das elektrische Versorgungsnetz zum Beispiel zu einem höheren Wert, der also Oberhalb der Nennfrequenz bzw. Nennspannung liegt, kann es vorteilhaft sein, den Totbandbereich entsprechend zu einem niedrigeren Wert zu verschieben, was besonders bedeutet, dass ein Mittelwert des jeweiligen Totbandbereichs zu dem betreffenden niedrigeren Wert gebracht wird.

Weist die Steuerfunktion eine Doppelabhängigkeit auf, sodass sie als Kennfläche darstellbar ist, kann auch ein entsprechend zweidimensionaler Totbandbereich vorgesehen sein, also ein Plateau, dass sich einerseits in Netzfrequenzrichtung erstreckt und andererseits in Netzspannungsrichtung erstreckt. Entsprechend kann ein solcher Totbandbereich eine Totfläche bilden und damit auch zwei breiten haben, also in zwei Richtungen jeweils eine Breite aufweisen. Beide Breiten können in Abhängigkeit von wenigstens einem Netzzustand und/oder wenigstens einer Netzcharakteristik eingestellt werden. Auch die Position einer solchen Totfläche, insbesondere ein Mittelpunkt einer solchen Totfläche kann in Abhängigkeit von wenigstens einem Netzzustand und/oder wenigstens einer Netzcharakteristik verändert werden.

Da eine Einspeiseeinheit nicht beliebig viel Wirk- oder Blindleistung einspeisen kann, können für die Steuerfunktion oder Teilsteuerfunktion Grenzwerte vorgesehen sein, zumindest ein Grenzwert je Funktion. Solche Grenzwerte können aber oftmals nicht nur die entsprechende Grenze festlegen, damit sie eingehalten wird, sondern ein solcher Grenzwert bildet häufig auch einen Eckpunkt einer Steuerfunktion oder Teilsteuerfunktion. Somit ist durch das Einstellen eines Grenzwertes auch eine anderweitige Veränderung der Steuerfunktion bzw. Teilsteuerfunktion möglich.

Besonders wurde erkannt, dass bei Vorliegen eines Netzfehlers Grenzwerte möglichst schnell erreicht werden sollten, um diesem Netzfehler möglichst effektiv zu begegnen. Dabei wurde auch erkannt, dass Netzfehler üblicherweise nur von sehr kurzer Dauer sind und daher ein Haushalten mit der einspeisbaren Leistung, das gilt besonders für die Wirkleistung in geringem Umfang auch für die Blindleistung, wenig erforderlich ist. Auch wurde erkannt, dass bei Netzfehlern ohnehin leicht Grenzwerte erreicht werden und insoweit ein Funktionsverlauf vor einer Grenze oder zwischen Grenzen kaum relevant ist.

Ebenfalls wurde erkannt, um ein weiteres Beispiel zu nennen, dass bei einem hohem dynamischen Umrichteranteil sehr viel Leistung durch umrichtergeführte Einspeiseeinheiten eingespeist wird und somit die Gesamtheit all dieser umrichtergeführten Einspeiseeinheiten ein großes Regelungspotenzial bilden kann. In dem Fall kann ein geringer Grenzwert, oder ein Grenzwert, der zu flachen Funktionsverläufen führt, ausreichend sein. Es wurde erkannt, dass zu der Frage, ob ein flacherer Verlauf ausreichend ist, auch in Betracht kommen kann, dass eine Überkompensation von Effekten auftreten könnte, wenn viele umrichtergeführte Einspeiseeinheiten zugleich nach gleicher oder ähnlicher Funktion beispielsweise die eingespeiste Wirkleistung erhöhen.

In Abhängigkeit von einem statischen Umrichteranteil wird insbesondere vorgeschlagen, einen unteren Grenzwert besonders für die Wirkleistungssteuerfunktion einzustellen. Insbesondere kann er dem Betrage nach besonders groß bzw. absolut gesehen besonders klein gewählt werden, wenn der statische Umrichteranteil groß ist. Hier wurde besonders erkannt, dass damit eine Leistungsentnahme gesteuert werden kann. Ein Potenzial für eine Leistungsentnahme kann aber auch von umrichtergeführten Einspeiseeinheiten durchgeführt werden, die aktuell wenig oder gar keine Leistung einspeisen. Daher ist hier besonders der statische Umrichteranteil relevant.

Ebenfalls wird vorgeschlagen, besonders dem Betrage nach große Grenzen für die Blindleistungssteuerfunktion vorzusehen, wenn der statische Umrichteranteil groß ist und der dynamische Umrichteranteil klein ist. Hier wurde besonders erkannt, dass das Einspeisen oder Entnehmen von Blindleistung nicht oder nur in geringem Maße von verfügbarer Wirkleistung abhängt, und somit bereits ein hoher statischer Umrichteranteil dazu führt, dass durch die umrichtergeführten Einspeiseeinheiten viel Blindleistung eingespeist aber auch entnommen werden kann. Eingespeiste Wirkleistung kann dabei sogar hinderlich sein, weil auch umrichtergeführte Einspeiseeinheiten beim Einspeisen eine Scheinstrombegrenzung berücksichtigen müssen. Wird bereits viel Wirkleistung eingespeist kann ein Großteil der Scheinstrombegrenzung bereits ausgeschöpft sein. Die eingespeiste Wirkleistung müsste dann verringert werden, um mehr Potenzial zum Einspeisen oder Entnehmen großer Blindleistung zu schaffen. Eine solche Reduzierung ist zwar möglich, aber unerwünscht. Ist aber die Wirkleistungseinspeisung durch umrichtergeführte Einspeiser ohnehin gering, was bei einem kleinem dynamischen Umrichteranteil der Fall sein kann, kann das Potenzial zum Einspeisen oder Entnehmen von Blindleistung voll ausgeschöpft werden.

Auch ein Gradient oder eine Steigung der Steuerfunktion bzw. der Teilsteuerfunktion kann festlegen, wie stark die betreffende Funktion auf Frequenzänderungen bzw. Spannungsänderungen reagiert. Ein solcher Gradient bzw. Steigung kann dabei wie eine Regelungsverstärkung wirken bzw. diese kennzeichnen. Ein Gradient ist besonders dann relevant, wenn die Wirkleistungssteuerfunktion bzw. die Blindleistungssteuerfunktion ihre Doppelabhängigkeit insgesamt berücksichtigen und die jeweilige Steuerfunktion durch eine Kennfläche beschrieben werden kann. Das größte Gefälle oder die größte Steigung wenigstens eines charakteristischen Punktes der Kennfläche bildet den Gradienten. Der Gradient gibt dabei die Steigung bzw. das Gefälle nach Betrag und Richtung an. Vorzugsweise wird wenigstens der betragsmäßig größte Gradient aller Punkte der Kennfläche betrachtet und verändert.

Setzt sich die Wirkleistungssteuerfunktion und/oder die Blindleistungssteuerfunktion aus Teilsteuerfunktionen zusammen, so können diese als Kennlinie dargestellt werden und durch eine Steigung gekennzeichnet sein. Auch hier kann die größte Steigung verwendet werden. Häufig weist eine solche Kennlinie aber nur eine Steigung auf. Insbesondere kann eine Kennlinie vorgesehen sein, die zwei Abschnitte mit linearer und gleicher Steigung aufweist, unterbrochen durch einen Totbandbereich. Außerdem ist die Kennlinie durch einen oberen und einen unteren Grenzwert begrenzt.

Auch hier wurde erkannt, dass durch diesen Gradienten oder die Steigung jeweils eine Verstärkung der Steuerfunktion oder Teilsteuerfunktion eingestellt werden kann. Damit sind auch hier die Überlegungen anwendbar, dass bei einem großen dynamischen Umrichteranteil eher eine geringere Steigung bzw. ein geringerer Gradient vorzusehen sind. In einem Fehlerfall können insbesondere größere Gradienten bzw. Steigungen vorgesehen sein.

Gemäß einem Aspekt wird vorgeschlagen, dass eine oder beide Steuerfunktionen oder eine oder mehrere Teilsteuerfunktionen durch eine Gewichtung veränderlich sind, wobei die Gewichtung insbesondere als Gewichtungsfaktor ausgebildet ist und dass die jeweilige Steuerfunktion bzw. Teilsteuerfunktion durch einstellen ihrer Gewichtung eingestellt wird.

Vorteile einer Gewichtung wurden oben bereits erläutert. Die Gewichtung als Gewichtungsfaktor auszubilden, ist eine einfache gleichwohl effektive Möglichkeit, sowohl eine Steuerfunktion mit Mehrfachabhängigkeit einzustellen, als auch eine Teilsteuerfunktion mit einfacher Abhängigkeiteinzustellen. Besonders kann dadurch auch eine Verstärkung eingestellt werden.

Besonders verändert sich durch die Gewichtung der Totbereich nicht, jedenfalls nicht in der Breite. Durch die Gewichtung, besonders, wenn sie als Gewichtungsfaktor ausgebildet ist, kann somit die Steigung und somit Verstärkung verändert werden, ohne die Steuerfunktion oder Teilsteuerfunktion ansonsten zu verändern. Die vorstehenden Erläuterungen zu der Wahl von Steigungen und damit Regelerverstärkungen, sind hier somit ebenfalls anwendbar.

Es kann aber grundsätzlich als Gewichtung auch eine Gewichtungsfunktion vorgesehen sein, die zu einer nichtlinearen Veränderung der Steuerfunktion bzw. der Teilsteuerfunktion führen kann. Das kann beispielsweise sinnvoll sein, um Grenzwerte zu berücksichtigen. Reicht also beispielsweise eine Steuerfunktion von -100 % bis +100 % und wird diese mit einem Gewichtungsfaktor von 2 multipliziert, also gewichtet, würde das Ergebnis von -200 % bis +200 % reichen, obwohl aber nur-100 % und +100 % umsetzbar wären. Es kann dafür vorgesehen sein, eine Gewichtungsfunktion zu verwenden, die besonders im Randbereich maximal den Wert 1 aufweist, oder einen anderen Wert, der das Überschreiten einer realistischen Grenze verhindert.

Besonders wird aber vorgesehen, dass Teilsteuerfunktionen unterschiedlich gewichtet werden.

Gemäß einem Aspekt wird vorgeschlagen, dass die Wirkleistungssteuerfunktion realisiert wird durch eine Wirkleistungsfrequenzfunktion, die eine Teilsteuerfunktion bildet und einen Zusammenhang zwischen erfasster Netzfrequenz und einem ersten Wirkleistungswert angibt, und eine Wirkleistungsspannungsfunktion, die eine Teilsteuerfunktion bildet und einen Zusammenhang zwischen erfasster Netzspannung und einem zweiten Wirkleistungswert angibt. Die Zusatzwirkleistung wird in Abhängigkeit von dem ersten und zweiten Wirkleistungswert bestimmt, insbesondere aus einer Summe des ersten und zweiten Wirkleistungswertes. Weiter wird dazu vorgeschlagen, dass die Wirkleistungsfrequenzfunktion durch eine Wirkleistungsfrequenzgewichtung, und die Wirkleistungsspannungsfunktion durch eine Wirkleistungsspannungsgewichtung einstellbar sind. Zum Verändern dieser beiden Teilsteuerfunktionen werden die Wirkleistungsfrequenzgewichtung und die Wirkleistungsspannungsgewichtung, zumindest eine davon, so verändert, dass ein Wirkleistungsgewichtungsquotient verändert, der einen Quotienten zwischen der Wirkleistungsfrequenzgewichtung und der Wirkleistungsspannungsgewichtung verändert.

Somit wird hier vorgesehen, dass sich die Wirkleistungssteuerfunktion aus zwei Teilsteuerfunktionen zusammensetzt, nämlich die Wirkleistungsfrequenzfunktion und die Wirkleistungsspannungsfunktion. Die Zusatzwirkleistung ergibt sich dann aus der Summe des ersten und zweiten Wirkleistungswertes, also im Ergebnis aus der Summe der beiden Teilsteuerfunktionen. Es kommt aber auch in Betracht, dass weitere Wirkleistungswerte hinzukommen können, die sich möglicherweise in Abhängigkeit von noch weiteren Eingangsgrößen ergeben. Daher muss sich die Zusatzwirkleistung nicht ausschließlich aus der Summe des ersten und zweiten Wirkleistungswertes zusammensetzen. Die Grundüberlegung ist hierbei aber, dass dies die wesentlichen Einflussgrößen zum Berechnen der Zusatzwirkleistung sind.

Um eine Abhängigkeit der Zusatzwirkleistung von der erfassten Netzfrequenz und der erfassten Netzspannung an die jeweilige Netzsituation anzupassen, werden hier zwei Gewichtungen vorgesehen, die insbesondere als zwei Faktoren ausgebildet sind. Dadurch kann besonders ein unterschiedlich starker Einfluss der erfassten Netzfrequenz einerseits und der erfassten Netzspannung andererseits eingestellt werden. Dadurch kann zwischen zwei unterschiedlich stark vorzusehenden Einflüssen dieser beiden Eingangsgrößen gewechselt werden. Je nach Netzsituation kann der Einfluss der erfassten Netzfrequenz oder der Einfluss der erfassten Netzspannung größer oder sogar dominierend sein, oder es können beide Einflüsse etwa gleich sein. Die Netzsituation wird hier besonders durch wenigstens einen Netzzustand und/oder wenigstens eine Netzcharakteristik berücksichtigt.

Entsprechend ist die Wirkleistungsfrequenzgewichtung und die Wirkleistungsspannungsgewichtung vorgesehen. Diese beiden Gewichtungen können verändert werden und dadurch verändert sich auch ein Wirkleistungsgewichtungsquotient. Dieser Wirkleistungsgewichtungsquotient gibt somit an, wie stark die Aufteilung des Einflusses der erfassten Netzfrequenz einerseits und der erfassten Netzspannung andererseits auf die Zusatzwirkleistung ist.

Dieser Einfluss kann somit am einfachsten dadurch verändert werden, dass jede dieser beiden Teilsteuerfunktionen, also die Wirkleistungsfrequenzfunktion und die Wirkleistungsspannungsfunktion durch ihre eigene Gewichtung beeinflusst wird, nämlich durch die Wirkleistungsfrequenzgewichtung bzw. Wirkleistungsspannungsgewichtung. In der technischen Umsetzung können natürlich auch andere Umsetzungen in Betracht kommen. Beispielsweise kann nur für eine der beiden Teilsteuerfunktionen eine Gewichtung vorgesehen sein, zusätzlich aber eine Gesamtgewichtungsfunktion, die die Summe der beiden Steuerfunktionen bzw. die Summe des ersten und zweiten Wirkleistungswertes gewichtet bzw. skaliert. Das Ergebnis ist das gleiche bzw. kann ohne weiteres ineinander umgerechnet werden. Mit Hilfe der erläuterten beiden individuellen Gewichtungen, also der Wirkleistungsfrequenzgewichtung und der Wirkleistungsspannungsgewichtung, kann die zugrundeliegende Idee aber am besten gezeigt werden.

So ist es besonders vorgesehen, dass bei einem Wechsel von einer Netzsituation zu einer anderen Netzsituation die eine Gewichtung rauf und die andere Gewichtung heruntergestellt wird. Vereinfacht ausgedrückt sind die Einflüsse der erfassten Netzfrequenz und und der erfassten Netzspannung auf die Zusatzwirkleistung gleich, wenn der Wirkleistungsgewichtungsquotient 1 ist. Dies dient aber nur der Veranschaulichung und letztlich hängt der Einfluss aber auch von den jeweiligen Teilsteuerfunktionen bzw. ihrer Skalierung ab.

Gemäß einem Aspekt wird vorgeschlagen, dass die Blindleistungssteuerfunktion realisiert wird durch eine Blindleistungsfrequenzfunktion, die eine Teilsteuerfunktion bildet und einen Zusammenhang zwischen erfasster Netzfrequenz und einem ersten Blindleistungswert angibt, und eine Blindleistungsspannungsfunktion, die eine Teilsteuerfunktion bildet und einen Zusammenhang zwischen erfasster Netzspannung und einem zweiten Blindleistungswert angibt. Die Zusatzblindleistung wird in Abhängigkeit von dem ersten und zweiten Blindleistungswert bestimmt, insbesondere aus einer Summe des ersten und zweiten Blindleistungswertes. Dazu wird vorgeschlagen, dass die Blindleistungsfrequenzfunktion durch eine Blindleistungsfrequenzgewichtung, und die Blindleistungsspannungsfunktion durch eine Blindleistungsspannungsgewichtung einstellbar sind. Zum Verändern dieser beiden Steuerfunktionen werden die Blindleistungsfrequenzgewichtung und die Blindleistungsspannungsgewichtung, zumindest eine davon, so verändert, dass ein Blindleistungsgewichtungsquotient verändert wird, der einen Quotienten zwischen der Blindleistungsfrequenzgewichtung und der Blindleistungsspannungsgewichtung verändert.

Somit wird hier für die Blindleistungssteuerfunktion vorgeschlagen, diese durch eine Blindleistungsfrequenzfunktion und eine Blindleistungsspannungsfunktion zu realisieren, die jeweils eine Teilsteuerfunktion bilden. Insbesondere kann hier eine lineare Überlagerung dieser beiden Teilsteuerfunktionen vorgesehen sein. Eine solche lineare Überlagerung kann im Übrigen auch für die vorstehend beschriebene Zusammensetzung der Wirkleistungssteuerfunktion aus der Wirkleistungsfrequenzfunktion und der Wirkleistungsspannungsfunktion vorgesehen sein.

Überhaupt wird hier für die so aus den beiden Teilsteuerfunktionen zusammengesetzte Blindleistungssteuerfunktion sinngemäß das gleiche vorgehen wir für die Wirkleistungssteuerfunktion vorgesehen, die sich aus einer Wirkleistungsfrequenzfunktion und einer Wirkleistungsspannungsfunktion zusammensetzt. Die Erläuterungen zu der so zusammengesetzten Wirkleistungssteuerfunktion treffen hier sinngemäß auf die zusammengesetzte Blindleistungssteuerfunktion ebenso zu.

Somit ist auch für die Blindleistungssteuerfunktion auf eine einfache Art und Weise möglich, diese in Abhängigkeit von der erfassten Netzfrequenz und in Abhängigkeit von der erfassten Netzspannung zu variieren. Dadurch kann je nach Netzsituation ein größerer Einfluss der erfassten Netzfrequenz oder ein größerer Einfluss der erfassten Netzspannung auf die Blindleistungssteuerfunktion bzw. auf die Zusatzblindleistung erreicht werden. Auch hier ist ein fließender Übergang durch entsprechende Wahl bzw. Veränderung der Blindleistungsfrequenzgewichtung und der Blindleistungsspannungsgewichtung realisierbar.

Gemäß einem Aspekt wird vorgeschlagen, dass mit steigendem statischen Umrichteranteil und/oder mit steigendem dynamischen Umrichteranteil Teilsteuerfunktionen so verändert werden, dass der Wirkleistungsgewichtungsquotient sinkt, und/oder der Blindleistungsgewichtungsquotient steigt. Außerdem oder alternativ wird vorgeschlagen, dass ein Wirkleistungsverhältnis dem Betrage nach sinkt, das ein Verhältnis einer mittleren normierten Steigung der Wirkleistungsfrequenzfunktion zu einer mittleren normierten Steigung der Wirkleistungsspannungsfunktion beschreibt. Außerdem oder alternativ wird vorgeschlagen, dass ein Blindleistungsverhältnis dem Betrage nach steigt, das ein Verhältnis einer mittleren normierter Steigung der Blindleistungsfrequenzfunktion zur normierten Blindleistungsspannungsfunktion beschreibt.

Somit wird besonders vorgeschlagen, dass der Wirkleistungsgewichtungsquotient mit steigendem statischen Umrichteranteil und/oder mit steigendem dynamischen Umrichteranteil sinkt. Dass der Wirkleistungsgewichtungsquotient sinkt, bedeutet, dass ein frequenzabhängiger Anteil der Zusatzwirkleistung geringer wird und ein spannungsabhängiger Anteil an der Zusatzwirkleistung steigt. Der Einfluss der erfassten Spannung auf die Zusatzwirkleistung wird somit bei steigendem statischen Umrichteranteil und/oder bei steigendem dynamischen Umrichteranteil größer.

Hier wurde besonders erkannt, dass sich eine Leistungsbilanz im elektrischen Versorgungsnetz desto weniger auf die Netzfrequenz auswirkt, je geringer der Anteil konventioneller Einspeiseeinheiten im elektrischen Versorgungsnetz ist. Diese Erkenntnis wird hier somit umgesetzt.

Außerdem oder alternativ wird vorgeschlagen, Teilsteuerfunktionen so zu verändern, dass der Blindleistungsgewichtungsquotient mit steigendem statischen Umrichteranteil und/oder mit steigendem dynamischen Umrichteranteil ebenfalls steigt. Für die Zusatzblindleistung nimmt dann also die Abhängigkeit von der Netzfrequenz zu. Auch hierwurde erkannt, dass bei sinkendem Anteil konventionelle Einspeiseeinheiten im elektrischen Versorgungsnetz eine Kopplung zwischen Blindleistung und Frequenz zunehmen und eine Kopplung zwischen Blindleistung und Spannung abnehmen kann, zumindest vergleichsweise abnehmen kann. Dies wird durch die entsprechende Einstellung der Teilsteuerfunktionen berücksichtigt.

Außerdem oder alternativ wird vorgeschlagen, Teilsteuerfunktionen so zu verändern, dass ein Wirkleistungsverhältnis, das das Verhältnis von normierter Wirkleistungsfrequenzfunktion zu normierter Wirkleistungsspannungsfunktion beschreibt, sinkt. Das Wirkleistungsverhältnis ist ganz ähnlich dem Wirkleistungsgewichtungsquotienten. Allerdings kann das Wirkleistungsverhältnis grundsätzlich ohne Verwendung von Gewichtungen verändert werden. Beispielsweise können die beiden Teilsteuerfunktionen, also die Wirkleistungsfrequenzfunktion und die Wirkleistungsspannungsfunktion anderweitig verändert werden, zum Beispiel indem jeweils eine andere Wirkleistungsfrequenzfunktion bzw. Wirkleistungsspannungsfunktion aus mehreren Auswahlsteuerfunktionen ausgewählt wird.

Das Wirkleistungsverhältnis ist dabei ein Verhältnis, also Quotient, der Steigung der Wirkleistungsfrequenzfunktion zur Steigung der Wirkleistungsspannungsfunktion. Hierwird besonders davon ausgegangen, dass ein Wirkleistungsverhältnis ein Verhältnis einer mittleren normierten Steigung der Wirkleistungsfrequenzfunktion zu einer mittleren normierten Steigung der Wirkleistungsspannungsfunktion beschreibt. Hier wird grundsätzlich davon ausgegangen, dass sowohl die Wirkleistungsfrequenzfunktion als auch die Wirkleistungsspannungsfunktion nur eine Steigung aufweist. Diese beiden Steigungen werden miteinander verglichen, indem sie ins Verhältnis gesetzt werden. Zur Beurteilung wird aber der Betrag betrachtet, nicht der absolute Wert was dann eine Rolle spielt, wenn ein solcher Quotient zu einem negativen Wert führt.

Sollten aber in einer Funktion mehrere Steigungen vorhanden sein, so wird eine mittlere Steigung betrachtet. Hierbei werden waagerechte Bereiche nicht berücksichtigt. Es wird also ein Totbandbereich nicht berücksichtigt und es wird auch kein Plateau oberhalb eines oberen Grenzwertes oder unterhalb eines unteren Grenzwertes berücksichtigt.

Da die Steigungen, von denen hier ein Verhältnis gebildet wird unterschiedliche physikalische Einheiten haben, und damit nicht unmittelbar vergleichbar sind, wird jeweils eine Normierung vorgeschlagen, die unten noch erläutert wird.

Ein sinkendes Wirkleistungsverhältnis hat also ähnliche oder sogar gleiche Aussagekraft wie ein sinkender Wirkleistungsgewichtungsquotient.

In diesem Sinne wird auch ein Blindleistungsverhältnis als Beurteilungsmaß vorgeschlagen. Es soll, wie der Blindleistungsgewichtungsquotient, mit steigendem statischen Umrichteranteil und/oder mit steigendem dynamischen Umrichteranteil ebenfalls steigen. Es gibt also einen ähnlichen oder gleichen Zusammenhang wieder, bedarf aber nicht der Verwendung einer Gewichtungsfunktion, schließt dies aber auch nicht aus. Ansonsten gelten die Erläuterungen zum Wirkleistungsverhältnis sinngemäß auch für das Blindleistungsverhältnis.

Gemäß einem Aspekt wird vorgeschlagen, dass das Wirkleistungsverhältnis, ein Verhältnis einer mittleren normierten Steigung der Wirkleistungsfrequenzfunktion zu einer mittleren normierten Steigung der Wirkleistungsspannungsfunktion beschreibt. Die Steigung der Wirkleistungsfrequenzfunktion ist dabei normiert auf einen Quotienten einer Nennleistung der Einspeiseeinheit zu einer maximal zulässigen Frequenzabweichung der Netzfrequenz von der Nennfrequenz, und die Steigung der Wirkleistungsspannungsfunktion ist normiert auf einen Quotienten der Nennleistung der Einspeiseeinheit zu einer maximal zulässigen Spannungsabweichung der Netzspannung von der Nennspannung. Dazu wird vorgeschlagen, dass das Wirkleistungsverhältnis dem Betrage nach mit steigendem statischen Umrichteranteil und/oder mit steigendem dynamischen Umrichteranteil sinkt, und einen Wert kleiner als 1 aufweist, wenn der statische Umrichteranteil und/oder der dynamische Umrichteranteil 80% erreicht oder übersteigt.

Somit wird für die Steigung der Wirkleistungsfrequenzfunktion und für die Steigung der Wirkleistungsspannungsfunktion eine konkrete Normierung vorgeschlagen, um auch eine quantitative Bewertung zu ermöglichen. Die Normierung der Steigung legt jeweils einen Quotienten der Nennleistung der Einspeiseeinheit zu einer maximal zulässigen Abweichung zugrunde, nämlich in einem Fall zu einer maximal zulässigen Frequenzabweichung und im anderen Fall zu einer maximal zulässigen Spannungsabweichung. Im Grunde werden die beiden Teilsteuerfunktionen, also die Wirkleistungsfrequenzfunktion und die Wirkleistungsspannungsfunktion auch nur in diesem Bereich definiert, denn werden die maximalen Abweichungen überschritten, müssen sich die Einspeiseeinheiten häufig vom Netz trennen. Gleichzeitig kann die Amplitude, also die Zusatzwirkleistung, Nennleistung und damit eine Grenze der Einspeiseeinheit erreichen. Das gilt meist auch für den negativen Wert, also die aus dem Netz entnehmbare Wirkleistung. Üblicherweise kann auch nicht mehr Wirkleistung aus dem elektrischen Versorgungsnetz entnommen werden, weil andernfalls eine zulässige Scheinstromgrenze überschritten werden würde. Die Normierung normiert somit - vereinfacht ausgedrückt - die jeweilige Steigung auf den maximalen Definitionsbereich der jeweiligen Teilsteuerfunktion.

Somit können diese beiden Steigungen verglichen werden und das Verhältnis dieser beiden Steigungen, also das Wirkleistungsverhältnis, jedenfalls dem Betrage nach, ist dann 1, wenn beide so normierten Steigungen - dem Betrage nach - gleichgroß sind. Ist der Wert kleiner als 1, so bedeutet das, dass die Steigung der Wirkleistung in Abhängigkeit von der Frequenz geringer ist als die Steigung der Wirkleistung in Abhängigkeit von der Spannung. Genau das wird gefordert, wenn der statische Umrichteranteil und/oder der dynamische Umrichteranteil den Wert von 80% erreicht oder übersteigt. Es wird also dann vorgeschlagen, wenn ein vergleichsweise kleiner Anteil konventioneller Einspeiseeinheiten im elektrischen Versorgungsnetz vorhanden ist.

Hier wurde besonders erkannt, dass ab einem solchen Wert von 80 % der Einfluss konventioneller Einspeiseeinheiten so gering geworden ist, dass die frequenzabhängige Wirkleistungssteigung kleiner sein kann als die Spannungsabhängige Wirkleistungssteigung.

Es wurde also erkannt, dass hier die Kopplung zwischen Wirkleistung und Spannung stärker anzunehmen ist als die Kopplung zwischen Wirkleistung und Frequenz.

Außerdem oder alternativ wird vorgeschlagen, dass das Blindleistungsverhältnis, ein Verhältnis einer mittleren normierten Steigung der Blindleistungsfrequenzfunktion zu normierter Blindleistungsspannungsfunktion beschreibt, wobei die Steigung der Blindleistungsfrequenzfunktion normiert ist auf einen Quotienten einer Nennleistung der Einspeiseeinheit zu einer maximal zulässigen Frequenzabweichung der Netzfrequenz von der Nennfrequenz. Dazu ist die Steigung der Blindleistungsspannungsfunktion normiert auf einen Quotienten einer Nennleistung der Einspeiseeinheit zu einer maximal zulässigen Spannungsabweichung der Netzspannung von der Nennspannung. Dazu wird vorgeschlagen, dass das Blindleistungsverhältnis dem Betrage nach mit steigendem statischen Umrichteranteil und/oder mit steigendem dynamischen Umrichteranteil steigt, und einen Wert größer als 1 aufweist, wenn der statische Umrichteranteil und/oder der dynamische Umrichteranteil 80% erreicht oder übersteigt.

Ähnlich wie das zu dem Wirkleistungsverhältnis erläutert wurde, das durch eine konkrete Normierung der beiden verglichenen Steigungen quantitativ bewertet werden kann, wird das hier auch für das Blindleistungsverhältnis vorgeschlagen. Der Normierung liegen ähnliche Gedanken zugrunde, nämlich den Bereich der jeweiligen Teilsteuerfunktion zugrunde zu legen, der auch sinnvollerweise nur umfasst sein kann.

Dabei ist auch für die Normierung der Blindleistungssteigung die Verwendung der Nennleistung, also der Nennwirkleistung, der Einspeiseeinheit sinnvoll, denn trotz unterschiedlicher Bedeutung von Blindleistung einerseits und Wirkleistung andererseits führt die bereits genannte Begrenzung auf eine Scheinstromgrenze für die Blindleistung zur selben Größe.

Das Blindleistungsverhältnis ist somit ein Verhältnis der frequenzabhängigen Blindleistungssteigung zur spannungsabhängigen Blindleistungssteigung. Dieses Verhältnis wird größer als 1, wenn die frequenzabhängige Blindleistungssteigung größer ist als die spannungsabhängige Blindleistungssteigung. Ein solches Verhältnis > 1 wird dann vorgeschlagen, wenn der statische Umrichteranteil und/oder der dynamische Umrichteranteil 80 % erreicht hat oder übersteigt. Auch hier liegt der Gedanke zugrunde, dass ab diesen 80 % der Anteil konventioneller Einspeiseeinheiten so gering geworden ist, dass eine größere Kopplung zwischen Blindleistung und Frequenz zu erwarten ist, als zwischen Blindleistung und Spannung. Daher wird eine entsprechende Auswahl oder Einstellung der Blindleistungsfrequenzfunktion und der Blindleistungsspannungsfunktion vorgeschlagen.

Erfindungsgemäß wird auch eine Einspeiseeinheit vorgeschlagen zum Austauschen elektrischer Leistung zwischen der Einspeiseeinheit und einem elektrischen Versorgungsnetz an einem Netzanschlusspunkt. Insbesondere ist die Einspeiseeinheit als Windenergieanlage oder als Windpark mit mehreren Windenergieanlagen ausgebildet. Das elektrische Versorgungsnetz, an das die Einspeiseeinheit über den Netzanschlusspunkt angeschlossen ist, weist eine veränderliche Netzspannung und eine veränderliche Netzfrequenz auf und ist durch eine Nennspannung und eine Nennfrequenz gekennzeichnet.

Außerdem ist die Einspeiseeinheit dazu vorbereitet, das Austauschen so zu steuern, dass das Austauschen elektrischer Leistung das Austauschen von Wirk- und Blindleistung umfasst, und das Austauschen der Wirkleistung in Abhängigkeit von einerfrequenz- und spannungsabhängigen Wirkleistungssteuerfunktion gesteuert wird, wobei die Wirkleistungssteuerfunktion eine zusätzlich zu einem Wirkleistungsgrundwert einzuspeisende Zusatzwirkleistung in Abhängigkeit von der erfassten Netzfrequenz und in Abhängigkeit von der erfassten Netzspannung vorgibt.

Weiterhin ist die Einspeiseeinheit dazu vorbereitet, dass das Austauschen der Blindleistung in Abhängigkeit von einer frequenz- und spannungsabhängigen Blindleistungssteuerfunktion gesteuert wird, wobei die Blindleistungssteuerfunktion eine zusätzlich zu einem Blindleistungsgrundwert einzuspeisende Zusatzblindleistung in Abhängigkeit von der erfassten Netzfrequenz und in Abhängigkeit von der erfassten Netzspannung vorgibt. Ebenfalls ist die Einspeiseeinheit dazu vorbereitet, das Einspeisen so zu steuern, dass die Wirkleistungssteuerfunktion und die Blindleistungssteuerfunktion jeweils eine Steuerfunktion bilden und in Abhängigkeit von wenigstens einer Netzcharakteristik und/oder wenigstens einem Netzzustand des elektrischen Versorgungsnetzes eingestellt werden.

Insbesondere ist ein solches Verfahren in der Einspeiseeinheit implementiert, zum Beispiel unter Zuhilfenahme einer Steuereinheit und/oder eines Prozessrechners. Insbesondere ist die Einspeiseeinheit als umrichtergeführte Einspeiseeinheit ausgebildet und verwendet somit einen Umrichter, der auch einen Wechselrichter verwenden kann oder Teil eines Wechselrichters sein kann, um elektrische Leistung in das elektrische Versorgungsnetz einzuspeisen. Mittels eines solchen Umrichters kann auch elektrische Leistung aus dem elektrischen Versorgungsnetz entnommen werden.

Außerdem sind entsprechende Schnittstellen vorhanden und/oder entsprechende Sensoren vorhanden, um die verwendeten Größen des elektrischen Versorgungsnetzes zu erfassen, insbesondere zum Erfassen der Netzspannung und der Netzfrequenz. Außerdem sind weitere Schnittstellen und/oder Sensoren vorgesehen, um den wenigstens einen Netzzustand zu erfassen und/oder die wenigstens eine Netzcharakteristik zu ermitteln. Besonders für das Ermitteln einer Netzcharakteristik und/oder eines Netzzustandes kann eine Kommunikationsschnittstelle vorgesehen sein, über die Informationen von Extern über den wenigstens einen Netzzustand und/oder die wenigstens eine Netzcharakteristik empfangen werden können. Je nach zu erfassender Netzcharakteristik und/oder zu erfassendem Netzzustand können auch Messwerte von Strom, Spannung und/oder eingespeister Leistung ausgewertet werden, um die benötigten Informationen daraus zu berechnen.

Insbesondere kann das Austauschen der Wirkleistung und der Blindleistung so gesteuert werden, dass jeweils ein Sollwert für die einzuspeisende oder zu entnehmende Wirkleistung bestimmt wird und ein Sollwert für die einzuspeisende oder zu entnehmende Blindleistung bestimmt wird. Diese Sollwerte können an die jeweilige Umrichtereinheit übertragen werden, die dann darauf basierend die Wirk- und Blindleistung einspeist bzw. entnimmt. Insbesondere kann der Umrichtereinheit hierfür ein einzuspeisender Strom nach Betrag und Phase vorgegeben werden.

Gemäß einem Aspekt wird vorgeschlagen, dass die Einspeiseeinheit dazu eingerichtet ist, ein Verfahren gemäß einer der vorstehend beschriebenen Ausführungsformen auszuführen. Außerdem oder alternativ ist vorgesehen, dass die Einspeiseeinheit eine Umrichtereinheit aufweist zum Austauschen elektrischer Leistung mit dem elektrischen Versorgungsnetz, und dass die Einspeiseeinheit wenigstens eine Steuereinheit aufweist, die jeweils dazu eingerichtet ist, die Umrichtereinheit oder eine der Umrichtereinheiten anzusteuern, wobei auf der wenigstens einen Steuereinheit eine Steuerung zum Steuern eines Verfahrens gemäß einer der vorstehend beschriebenen Ausführungsformen implementiert ist.

Insbesondere kann eine einzelne Steuereinheit und eine einzelne Umrichtereinheit vorgesehen sein, wenn die Einspeiseeinheit lediglich eine Windenergieanlage ist. Ist die Einspeiseeinheit als Windpark mit mehreren Windenergieanlagen ausgebildet, so kann auch dieser Windpark eine gemeinsame Umrichtereinheit für alle Windenergieanlagen aufweisen und es kann dazu eine Steuereinheit vorgesehen sein, die diese eine Umrichtereinheit steuert.

Bevorzugt ist aber auch in einem Windpark jede einzelne Windenergieanlage mit einer Steuereinheit und einer Umrichtereinheit ausgestattet. Gegebenenfalls kann zusätzlich noch eine zentrale Steuereinheit zum Vorgeben und Koordinieren von Sollwerten für alle Windenergieanlagen vorgesehen sein.

Es kann das vorgeschlagene Verfahren auf jeder Windenergieanlage einzeln implementiert sein. Die entsprechenden Steuerfunktionen oder Teilsteuerfunktionen sind dann natürlich insbesondere in ihrer Höhe an die entsprechende Windenergieanlage, nämlich insbesondere an ihre Nennleistung angepasst. Es resultiert dann dennoch ein Gesamtverhalten für den Windpark, in dem nämlich das Verhalten der einzelnen Windenergieanlagen überlagert ist.

Nachfolgend wird die Erfindung beispielhaft anhand von Ausführungsformen unter Bezugnahme auf die begleitenden Figuren näher erläutert.
Figur 1 zeigt eine Windenergieanlage in einer perspektivischen Darstellung.
Figur 2 zeigt einen Windpark in einer schematischen Darstellung.
Figur 3 zeigt eine schematische Steuerungsstruktur zum Ausführen eines vorgeschlagenen Verfahrens.
Figur 4 zeigt zwei Teilsteuerfunktionen zum Bestimmen einer Zusatzwirkleistung.
Figur 5 zeigt zwei Teilsteuerfunktionen zum Bestimmen ein er Zusatzblindleistung.
Figur 6 zeigt einen verallgemeinerten Netzabschnitt eines elektrischen Versorgungsnetzes in einer vereinfachten Darstellung.

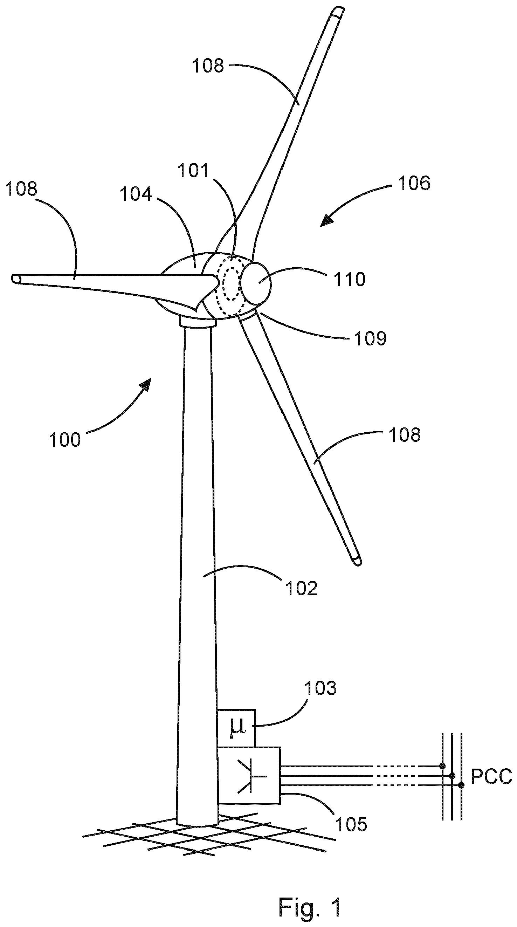

Figur 1 zeigt eine perspektivische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.]

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

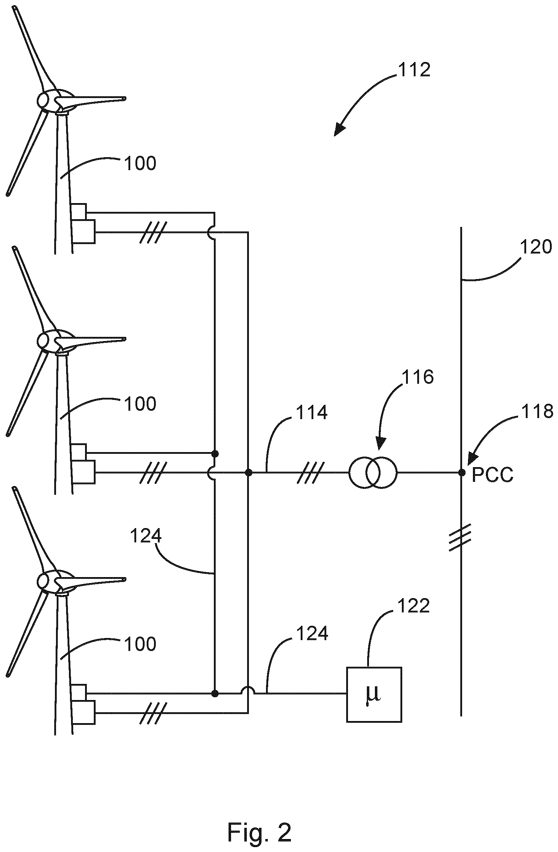

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und an dem Einspeisepunkt 118, der auch allgemein als PCC bezeichnet wird, in das Versorgungsnetz 120 eingespeist. Meist ist ein Transformator 116 vorgesehen, der die Spannung im Park am Einspeisepunkt 118 hochtransformiert. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

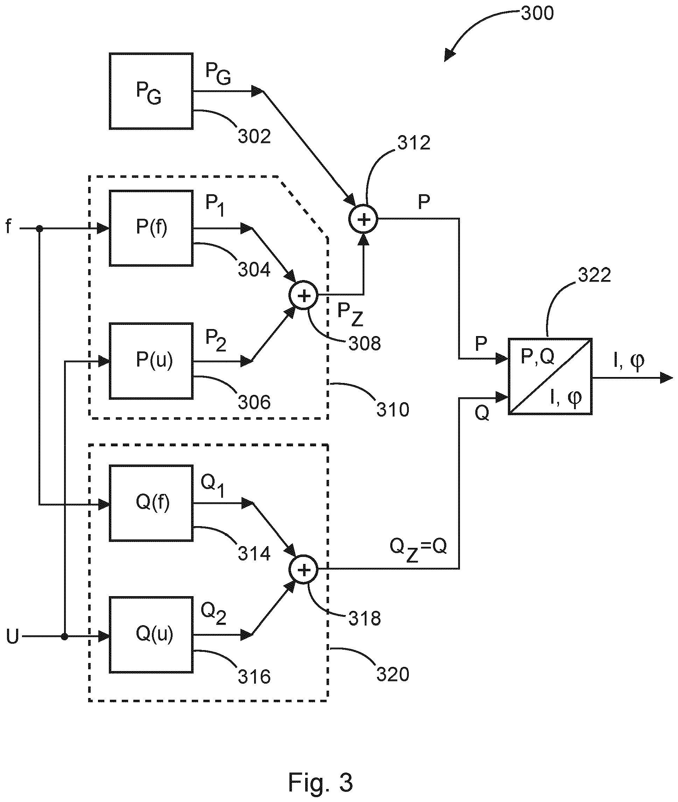

Figur 3 zeigt eine Steuerungsstruktur zum Steuern, insbesondere zum Vorgeben mit dem elektrischen Versorgungsnetz auszutauschender Leistung. Die Steuerstruktur 300 zeigt einen Leistungsvorgabeblock 302, der einen Wirkleistungsgrundwert P_{G} vorgibt. Das kann auf eine Anforderung hin erfolgen und/oder in Abhängigkeit von verfügbarer Leistung. Wenn es, besonders im Falle von Windenergieanlagen, in Abhängigkeit von verfügbarer Leistung, nämlich Windleistung erfolgt, muss das nicht bedeuten, dass der Wirkleistungswert P_{G} der in dem Moment maximal verfügbaren Leistungen entspricht. Der Wert kann auch geringer gewählt werden, um nämlich potenziellen Aktionsraum für weitere Leistungsanteile zu schaffen. Weiterhin ist ein Wirkleistungsfrequenzblock 304 vorgesehen, der eine Wirkleistungsfrequenzfunktion P(f) beinhaltet, um in Abhängigkeit von der erfassten Netzfrequenz feinen ersten Wirkleistungswert P₁ zu bestimmen.

Ferner ist ein Wirkleistungsspannungsblock 306 vorgesehen, der eine Wirkleistungsspannungsfunktion P(U) beinhaltet, um in Abhängigkeit von der erfassten Netzspannung U einen zweiten Wirkleistungswert P₂ zu bestimmen. Der erste Wirkleistungswert und der zweite Wirkleistungswert werden dann in der ersten Summierstelle 308 zu einer zusätzlich einzuspeisenden Zusatzwirkleistung P_{z} addiert.

Der Wirkleistungsfrequenzblock 304 und der Wirkleistungsspannungsblock 306, zusammen mit der zweiten Summierstelle 308 realisieren somit eine Wirkleistungssteuerfunktion. Die drei genannten Elemente können somit zu einem Wirkleistungssteuerblock 310 zusammengefasst werden. Entsprechend ist der Wirkleistungssteuerblock 310 als gestrichelter Block dargestellt, der die drei genannten Elemente zusammenfasst.

Der Wirkleistungssteuerblock 310 gibt somit in Abhängigkeit von der erfassten Netzfrequenz f und der erfassten Netzspannung u die Zusatzwirkleistung P_{z} aus. Diese wird an der zweiten Summierstelle 312 zum Wirkleistungsgrundwert P_{G} zuaddiert, sodass sich die insgesamt einzuspeisende Wirkleistung P ergibt.

Zur Berücksichtigung der Blindleistung wird ganz ähnlich vorgegangen. Hier ist ein Blindleistungsfrequenzblock 314 vorgesehen, der eine Wirkleistungsfrequenzfunktion beinhaltet. Somit bestimmt er in Abhängigkeit von der erfassten Netzfrequenz f einen ersten Blindleistungswert Q₁. Durch einen Blindleistungsspannungsblock 316 wird in Abhängigkeit von der erfassten Netzspannung ein zweiter Blindleistungswert Q₂ bestimmt. Dafür beinhaltet der Blindleistungsspannungsblock 316 eine Blindleistungsspannungsfunktion. Der erste und zweite Blindleistungswert Q₁ und Q₂ werden an der dritten Summierstelle 318 zu der Zusatzblindleistung Qz aufaddiert.

Somit können der Blindleistungsfrequenzblock 314, der Blindleistungsspannungsblock 316 und die dritte Summierstelle 318 zu einem Blindleistungssteuerblock 320 logisch zusammengefasst werden. Der Blindleistungssteuerblock realisiert somit die Wirkungsweise einer Blindleistungssteuerfunktion.

Für die Blindleistung ist oftmals nicht vorgesehen, dass ein von 0 verschiedener Blindleistungsgrundwert tatsächlich existiert bzw. zusätzlich vorgegeben wird. Daher ist für die Blindleistung hier kein Äquivalent zum Leistungsvorgabeblock 302 der Wirkleistung vorgesehen. Gleichwohl kann ein solcher Block aber vorgesehen sein, wenn doch zusätzlich ein Blindleistungsgrundwert vorgegeben werden soll. Dieser könnte dann zu dem Zusatzblindleistungswert Qz zuaddiert werden. Ist ein solcher Blindleistungsgrundwert aber nicht vorhanden, wie in der in Figur 3 gezeigten Variante, entspricht die Zusatzblindleistung Qz der einzuspeisenden bzw. der auszutauschenden Blindleistung Q.

Die einzuspeisende Wirkleistung P und die einzuspeisende Blindleistung Q werden dann in dem Umwandlungsblock 322 in einen einzuspeisenden Strom I umgewandelt bzw. umgerechnet. Der einzuspeisende Strom I ist dabei durch seine Amplitude und zusätzlich durch seine Phasenlage ϕ gekennzeichnet. Entsprechend ist das Ergebnis des Umwandlungsblock 322 ein einzuspeisender Strom nach Amplitude I und Phase ϕ. Dieses Ergebnis kann an einen Umrichter gegeben werden, der einen entsprechenden Strom nach Betrag und Phase erzeugt und einspeist bzw. aus dem elektrischen Versorgungsnetz nimmt.

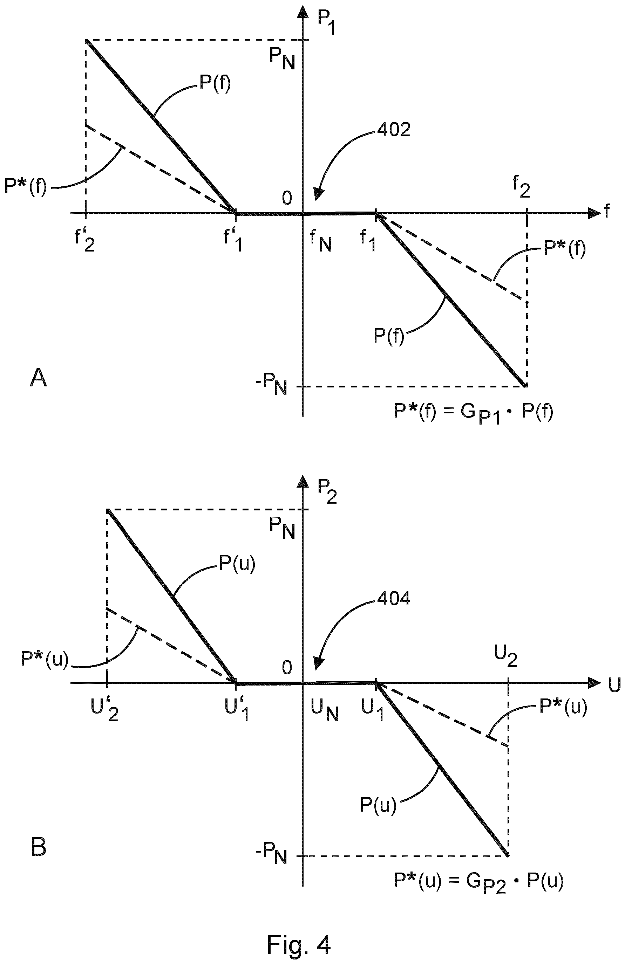

Die Figur 4 zeigt zwei Diagramme jeweils für eine mögliche Wirkleistungsfrequenzfunktion und eine mögliche Wirkleistungsspannungsfunktion. In dem oberen Diagramm A ist somit eine Wirkleistungsfrequenzfunktion P(f) dargestellt. Sie gibt einen Zusammenhang zwischen der erfassten Netzfrequenz f und einem ersten Wirkleistungswert P₁ an. Im Ursprung der Darstellung ist der erste Wirkleistungswert 0 und die Frequenz f weist Nennfrequenz f_{N} auf. Dort ist auch ein Totbandbereich zwischen den Frequenzwerten f'₁ und f₁ vorhanden. Dieser Totbandbereich 402 kann durch Veränderung der Frequenzwert f'₁ und f₁ verändert werden, sowohl in seiner Breite als auch in seiner Position. Häufig ist der Totbandbereich 402 aber symmetrisch zum Ursprung, also zur Nennfrequenz f_{N}.

Ansonsten fällt diese Wirkleistungsfrequenzfunktion P(f) bei der untersten Frequenz f'₂ von dem Nennleistungswert P_{N} kontinuierlich auf 0 ab bei der unteren Totbandfrequenz f_{1'}. Nach dem Totbandbereich 402 fällt die Wirkleistungsfrequenzfunktion P(f) auf den Wert - P_{N} ab, nämlich von der oberen Totbandfrequenz f₁ bis zur obersten Frequenz f₂.

Die gezeigte Wirkleistungsfrequenzfunktion P(f) kann als eine Grundfunktion angesehen werden, die zur Verwendung gewichtet werden kann. Insbesondere kann sie zur Gewichtung mit einer Wirkleistungsfrequenzgewichtung G_{P1} gewichtet werden und die ist hier als Faktor vorgesehen. Es ergibt sich dann eine modifizierte Wirkleistungsfrequenzfunktion P*(f) und diese ist in dem Diagramm A der Figur 4 gestrichelt dargestellt. Im Totbandbereich 402 ergibt sich kein Unterschied.

In der Darstellung des Diagramms A beträgt der Gewichtungsfaktor etwa den Wert 0,5 (G_{P1} = 0,5).

Diagramm B der Figur 4 veranschaulicht eine Wirkleistungsspannungsfunktion P(U). Die Wirkleistungsspannungsfunktion P(U) weist ebenfalls einen Totbandbereich 404 auf. Dieser liegt zwischen der unteren Totbandspannung U'₁ und der oberen Totbandspannung U₁. Ansonsten verläuft die Wirkleistungsspannungsfunktion P(U), so dass sie von der untersten Spannung U'₂ bei Nennleistung P_{N} auf 0 bei der unteren Totbandspannung U'₁ abfällt. Von der oberen Totbandspannung U₁ fällt sie weiter bis zur obersten Spannung U₂ auf negative Nennleistung - P_{N} ab.

Auch hier soll die Wirkleistungsspannungsfunktion P(U) eine Basisfunktion bilden, die noch mit einer Wirkleistungsspannungsgewichtung gewichtet werden soll, die hier auch als Gewichtungsfaktor G_{P2} realisiert wird. Entsprechend ergibt sich die modifizierte Wirkleistungsspannungsfunktion P*(U).

Auch hier weist der Gewichtungsfaktor P_{P2} etwa den Wert 0,5 auf, was zu einer Abflachung der modifizierten Wirkleistungsspannungsfunktion P*(U) gegenüber der nicht modifizierten Wirkleistungsspannungsfunktion P(U) führt.

Hier ist ein Ansatz vorgeschlagen worden, bei dem sowohl die unmodifizierte Wirkleistungsfrequenzfunktion P(f) als auch die unmodifizierte Wirkleistungsspannungsfunktion P(U) maximal gewählt wurde, nämlich so, dass sie bis zur Nennleistung P_{N} bzw. bis zum negativen Wert der Nennleistung - P_{N} reicht. Zur Verwendung kann sie mit dem jeweiligen Gewichtungsfaktor multipliziert werden, der hier als Wert zwischen 0 und 1 vorgeschlagen wird.

Besonders wird vorgeschlagen, dass der Wirkleistungsfrequenzgewichtungsfaktor G_{P1} und der Wirkleistungsspannungsgewichtungsfaktor G_{P2} in Summe maximal 1 ergibt. Der Grund dafür kann anhand der Gegenüberstellung dieser beiden Diagramme A und B erläutert werden.

Dadurch dass beide Funktionen mit einem Gewichtungsfaktor <1 multipliziert werden, werden beide Funktionen abgeflacht. Dadurch, dass die Summe der beiden Gewichtungsfunktionen den Wert 1 nicht überschreiten sollten, resultiert auch bei der Summe der Funktionen betragsmäßig maximal der Wert der Nennleistung P_{N}. Es kommt natürlich auch in Betracht, dass selbst das Erreichen von Nennleistung nicht erwünscht ist, besonders, weil die hierdurch bestimmte Zusatzwirkleistung P auch noch zu einem Wirkleistungsgrundwert P_{G} addiert werden soll, wie der Steuerstruktur 300 der Figur 3 zu entnehmen ist. Entsprechend können die Gewichtungen so gewählt werden, dass sie in Summe unter, insbesondere deutlich unter dem Wert 1 liegen.

Ebenfalls ist zu erkennen, dass durch die Multiplikation mit dem jeweiligen Gewichtungsfaktor die entsprechende Funktion bzw. die in dem Diagramm dazu dargestellte Kennlinie, flacher wird, ihre Steigung also sinkt. Für das in Figur 4 veranschaulichte Beispiel sollen die beiden Gewichtungsfaktoren G_{P1} und G_{P2} gleich groß sein, nämlich 0,5 betragen. Entsprechend sind auch die beiden modifizierten Funktionen, also die modifizierte Wirkleistungsfrequenzfunktion P*(f) und die modifizierte Wirkleistungsspannungsfunktion P*(U) flacher und weisen eine flachere Steigung auf. Zumindest gemäß der gewählten Darstellung weisen sie die gleiche Steigung. Da hier, abgesehen von dem jeweiligen Totbandbereich, nur eine Steigung vorhanden ist, ist diese Steigung auch gleichzeitig jeweils die mittlere Steigung.

Um nun die Gewichtung zu bewerten, kann ein Quotient dieser beiden Steigungen gebildet werden und da sie im gewählten Beispiel der Figur 4 gleich groß sind, beträgt dieser Faktor 1. Ebenfalls sind die beiden Gewichtungsfaktoren gleich groß und ihr Quotient ist ebenfalls 1. Somit kann das Verhältnis der beiden Gewichtungsfaktoren als auch das Verhältnis der beiden Steigungen zu dem gleichen oder ähnlichen Ergebnis führen. Sollten die Funktionen komplexer ausgebildet sein, könnten sich natürlich Unterschiede ergeben.

Jedenfalls sind hier die gleichen Werte für die beiden Gewichtungsfaktoren gewählt und die beiden Funktionen weisen die gleichen Steigungen auf und das wird gemäß einer Ausführungsform für einen geringen Anteil konventioneller Einspeiseeinheiten im elektrischen Versorgungsnetz vorgeschlagen. Besonders wird das auch vorgeschlagen, wenn der statische Umrichteranteil und/oder der dynamische Umrichteranteil wenigstens 80 % beträgt.

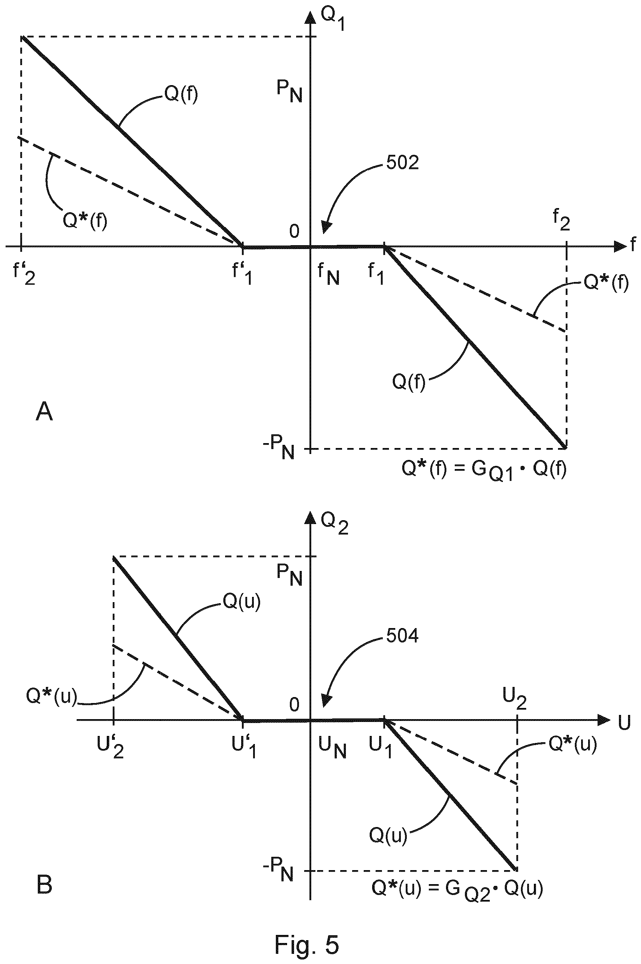

Die Figur 5 entspricht im Grunde der Figur 4 wobei aber Funktionen für die Blindleistung gezeigt sind. Somit zeigt in Figur 5 Diagramm A eine Blindleistungsfrequenzfunktion Q(f) und Diagramm B eine Blindleistungsspannungsfunktion Q(U). Die Amplituden sind hier auch jeweils auf Nennleistung P_{N} normiert, wie in Figur 4. Physikalisch gesehen unterscheidet sich die Einheit für Blindleistung Q zwar von der Einheit für Wirkleistung P, der Wert der Nennleistung P_{N} kann gleichwohl für die Normierung auch der Blindleistungsfunktionen Q(f) und Q(U) verwendet werden.

In dem Diagramm A sind als Frequenzwerte dieselben wie in dem Diagramm A der Figur 4 gewählt worden, nämlich eine unterste Frequenz f'₂, eine untere Totbandfrequenz f'₁, eine obere Todbandfrequenz f₁ und eine oberste Frequenz f₂. Ein Todbandbereich 502 ist ebenfalls vorgesehen, somit gibt die Blindleistungsfrequenzfunktion Q(f) jeweils einen ersten Blindleistungswert Q₁ in Abhängigkeit von der erfassten Netzfrequenz f an. Die Verläufe entsprechen ebenfalls sinngemäß der Wirkleistungsfrequenzfunktion P(f) der Figur 4. Sie können aber auch anders ausgebildet sein und es können auch andere Frequenzwerte verwendet werden. Vorzugsweise wird aber vorgeschlagen, ähnliche bzw. sinngemäß gleiche Funktionen zu verwenden, wie dies in den Figuren 4 und 5 dargestellt ist.

Ebenfalls wird vorgeschlagen, die Blindleistungsfrequenzfunktion Q(f) als Basisfunktion bzw. unmodifizierte Blindleistungsfrequenzfunktion zu verwenden. Sie kann dann mit einem Blindleistungsspannungsgewichtungsfaktor G_{Q1} multipliziert werden, der zwischen 0 und 1 liegen kann um dadurch die Blindleistungsfrequenzfunktion Q(f) abzuflachen. Die modifizierte Blindleistungsfrequenzfunktion Q*(f) ist in dem Diagramm A der Figur 5 gestrichelt dargestellt.

Entsprechendes wird auch für die Blindleistungsspannungsfunktion Q(U) vorgeschlagen, die zur Gewichtung mit einem Blindleistungsspannungsgewichtungsfaktor G_{Q2} multipliziert wird. Dieser sollte zwischen 0 und 1 liegen und führt zu einer Abflachung der Blindleistungsspannungsfunktion Q(U). Das Ergebnis ist die modifizierte Blindleistungsspannungsfunktion Q*(U).

Auch hier wird vorzugsweise vorgeschlagen, dass die beiden Gewichtungsfaktoren G_{Q1} und G_{Q2} in Summe den Wert 1 nicht überschreiten.

Besonders kann durch diese Gewichtungen, also insbesondere diese beiden Gewichtungsfaktoren G_{Q1} und G_{Q2} jeweils die Blindleistungsfrequenzfunktion Q(f) und die Blindleistungsspannungsfunktion Q(U) unterschiedlich gewichtet werden. Dadurch kann der Einfluss der erfassten Netzfrequenz f einerseits und der erfassten Netzspannung U andererseits variiert werden. Besonders kann in Abhängigkeit von einem Netzzustand und/oder einer Netzcharakteristik der Einfluss der Frequenz groß und Einfluss der Spannung klein gewählt werden oder umgekehrt.

Gleiches gilt übrigens auch für die beiden Gewichtungsfaktoren G_{P1} und G_{P2} der Figur 4 bzw. der dort erläuterten Funktionen.

Im Übrigen ist auch beim Diagramm B der Figur 5 die gleiche Spannungsachse wie in Diagramm B der Figur 4 gewählt worden. Somit ist auch ein unterster Spannungswert U'₂, ein unterer Totbandspannungswert U'₁, ein oberer Totbandspannungswert U₁ und ein oberster Spannungswert U₂ vorgesehen. Ein Totbandbereich 504 ist ebenfalls vorgesehen.

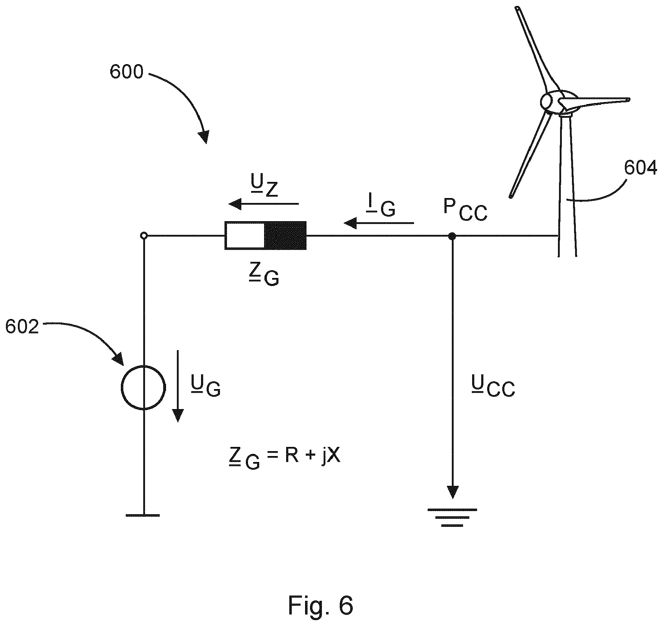

Figur 6 zeigt symbolisch einen Netzabschnitt 600. Der Netzabschnitt 600 weist dabei eine Ersatzspannungsquelle 602 auf. Eine Ersatzspannungsquelle 602 gibt eine idealisierte Spannungsquelle mit einer festen Spannung an. In diesem Sinne gibt die Ersatzspannungsquelle 602 die feste Netzspannung U_{G} an. Die Spannung einer Ersatzspannungsquelle 602 wird als fest angenommen, die sich also durch die Beschaltung nicht verändert. Effekte durch eine Beschaltung oder Belastung werden durch weitere Elemente berücksichtigt.

Die Netzimpedanz Z_{G} ist eine solche Beschaltung, die nämlich zwischen der Ersatzspannungsquelle 602 und den Netzanschlusspunkt Pcc geschaltet ist. An dem Netzanschlusspunkt Pcc ist die Windenergieanlage 604 angeschlossen, die somit über diesen Netzanschlusspunkt Pcc in das elektrische Versorgungsnetz bzw. den Netzabschnitt 600 einspeist. Dazu speist sie einen Einspeisestrom I_{G} ein. Am Netzanschlusspunkt Pcc ergibt sich eine Netzanschlusspunktspannung Ucc. Dieser hängt von der Ersatzspannungsquelle 602 bzw. der Netzspannung U_{G} ab, sowie der Netzimpedanz Z_{G} und dem Eingespeisten Strom I_{G}.

Daher wird die Betrachtung dieser Netzimpedanz Z_{G} vorgeschlagen, die nämlich das Einspeisen durch die Einspeiseeinheit, hier also die Windenergieanlage 604, beeinflusst.

Dabei wurde besonders erkannt, dass von Relevanz sein kann, wie groß das Verhältnis vom ohmschen Widerstand R zur Reaktanz X ist, also wie groß das Verhältnis des Wirkwiderstands R zum Blindwiderstandes X ist. Je kleiner dieses Verhältnis ist, umso dominanter ist die Reaktanz X und umso größer ist eine Phasenverschiebung an der Netzimpedanz Z_{G} bei der Einspeisung des Einspeisestroms I_{G}.

Es wird daher besonders vorgeschlagen, dieses Verhältnis zu berücksichtigen, insbesondere ist ein solches R/X-Verhältnis eine Netzcharakteristik und diese soll vorzugsweise bei der Einstellung der Wirkleistungssteuerfunktion und der Blindleistungssteuerfunktion berücksichtigt werden.

Der vorliegenden Erfindung liegt somit die Idee zugrunde, dass eine konventionelle Phasenwinkelregelung und Leistungsregelung erweitert werden kann, um sowohl in konventionellen elektrischen Versorgungsnetzen, bei denen ein hoher Anteil konventioneller Einspeiseeinheiten vorhanden ist, als auch in Netzen mit einer hohen Umrichterpenetration zu funktionieren. Dies wird durch eine mehrfachgewichtete Funktion erreicht, die in Abhängigkeit einer Netzzustandsgröße die Gewichtung und/oder die Charakteristik ändern. Zum Ändern dieser Gewichtung der mehrfachgewichteten Funktionen und/oder zum Ändern ihrer Charakteristik, kann auch neben einer Netzzustandsgröße wenigstens eine Netzcharakteristik berücksichtigt werden.

Eine Umrichterpenetration kann über einen statischen Umrichteranteil oder einen dynamischen Umrichteranteil berücksichtigt werden.

Besonders wird die beschriebene Lösung für umrichtergeführte Einspeiseeinheiten, insbesondere umrichtergeführte regenerative Einspeiseeinheiten vorgeschlagen. Umrichtergeführte Einspeiseeinheiten können synonym auch als umrichtergesteuerte oder umrichterbasierte Einspeiseeinheiten bezeichnet werden. Einspeiseeinheiten können synonym auch als Einspeiser bezeichnet werden.

Das vorgeschlagene Verfahren wird sowohl für konventionelle elektrische Versorgungsnetze als auch für elektrische Versorgungsnetze vorgeschlagen, die eine hohe Umrichterpenetration aufweisen, bzw. einen hohen statischen und/oder dynamischen Umrichteranteil aufweisen.

Besonders wurde erkannt, dass Netzstützungsmaßnahmen je nach Netzcharakteristik eine unterschiedliche Wirkung haben können. Konventionelle Netze, die also ausschließlich oder überwiegend konventionelle Einspeiseeinheiten aufweisen, reagieren fast ausschließlich in einer Frequenz auf eine Leistungsänderung und in der Spannung auf eine Blindleistungsänderung. Bei einer sehr hohen Umrichterpenetration, also bei einem kleinen Anteil konventioneller Einspeiser, kann sich diese Abhängigkeit aber verschieben, bis hin zu einer Abhängigkeit der Frequenz von der Blindleistung und der Spannung von der Wirkleistung. Dazwischen können sowohl die Netzfrequenz als auch die Netzspannung eine Doppelabhängigkeit aufweisen und jeweils sowohl von der Wirkleistung als auch von der Blindleistung abhängen.

Ein wichtiger Punkt der zugrundeliegenden Idee ist, sowohl eine Phasenwinkelregelung, als auch eine Wirkleistungsregelung netzzustandsabhängig mehrfach abhängig durchzuführen. Durch die Phasenwinkelregelung wird ein Phasenwinkel des einzuspeisenden Stromes und damit ein Blindleistungsanteil gesteuert bzw. geregelt. In Abhängigkeit von dem Netzzustand können dabei somit die Gewichtung und/oder die Funktionscharakteristik sowohl der Phasenwinkelregelung, also der Blindleistungsregelung, als auch der Wirkleistungsregelung eingestellt werden.

Die Figuren 4 und 5 veranschaulichen insbesondere eine Anpassung mit Hilfe einer Gewichtung. Aber eine Veränderung der Totbandbereiche ist eine Veränderung der Funktionscharakteristik. Die Totbandbereiche können entsprechend dadurch verändert werden, dass die untere und obere Totbandfrequenz bzw. die untere und obere Totbandspannung verändert werden. Dadurch kann die Funktionscharakteristik verändert werden.

Es komm aber natürlich auch in Betracht, beide Arten der Veränderung durchzuführen, also sowohl eine Veränderung über die Gewichtung, als auch gleichzeitig eine Veränderung der Todbänder oder auch eine andere Veränderung. Beispielsweise kann statt einer geraden Steigung der Zweig vor bzw. nach dem jeweiligen Todbandbereich auch anders als über eine lineare Funktion gewählt werden. Eine Möglichkeit wäre eine quadratische Funktion zugrunde zu legen, den Kennlinienzweig also in Abhängigkeit von einem Quadrat der Frequenz bzw. der Spannung vorzugeben, um nur ein Beispiel zu nennen. Es kommt aber auch eine stückweise Zusammensetzung in Betracht, nämlich zusätzlich zu der stückweisen Zusammensetzung der gezeigten beiden schrägen Arme und des Todbandbereichs. Jeder schräge Arm kann beispielsweise zwei unterschiedliche Steigungsbereiche aufweisen, um ein weiteres Beispiel zu nennen.

## Patentansprüche

1. Verfahren zum Austauschen elektrischer Leistung zwischen einer Einspeiseeinheit, insbesondere einer Windenergieanlage (100) oder einem Windpark (112), und einem elektrischen Versorgungsnetz (120) an einem Netzanschlusspunkt (118), wobei
- das elektrische Versorgungsnetz (120) eine veränderliche Netzspannung und eine veränderliche Netzfrequenz aufweist, und durch eine Nennspannung und eine Nennfrequenz gekennzeichnet ist,
- das Austauschen elektrischer Leistung das Austauschen von Wirk- und Blindleistung umfasst,
- das Austauschen der Wirkleistung in Abhängigkeit von einer frequenz- und spannungsabhängigen Wirkleistungssteuerfunktion gesteuert wird, wobei
- die Wirkleistungssteuerfunktion eine zusätzlich zu einem Wirkleistungsgrundwert einzuspeisende Zusatzwirkleistung in Abhängigkeit von der erfassten Netzfrequenz und in Abhängigkeit von der erfassten Netzspannung vorgibt,
- das Austauschen der Blindleistung in Abhängigkeit von
- einer frequenz- und spannungsabhängigen Blindleistungssteuerfunktion gesteuert wird, wobei
- die Blindleistungssteuerfunktion eine zusätzlich zu einem Blindleistungsgrundwert einzuspeisende Zusatzblindleistung in Abhängigkeit von der erfassten Netzfrequenz und in Abhängigkeit von der erfassten Netzspannung vorgibt, und
- die Wirkleistungssteuerfunktion und die Blindleistungssteuerfunktion jeweils eine Steuerfunktion bilden und in Abhängigkeit von
- wenigstens einer Netzcharakteristik und/oder
- wenigstens einem Netzzustand des elektrischen Versorgungsnetzes eingestellt werden.

2. Verfahren nach Anspruch 1, **dadurch gekennzeichnet, dass**
- ein statischer Umrichteranteil eine Netzcharakteristik bildet, wobei ein statischer Umrichteranteil ein Verhältnis beschreibt von
- durch umrichtergeführte Einspeiseeinheiten in das elektrische Versorgungsnetz oder einen Netzabschnitt davon einspeisbarer Leistung zu
- insgesamt durch alle Einspeiseeinheiten in das elektrische Versorgungsnetz oder den Netzabschnitt einspeisbarer Leistung, und/oder
- ein R/X-Verhältnis am Netzanschlusspunkt eine Netzcharakteristik bildet.

3. Verfahren nach Anspruch 1 oder 2, **dadurch gekennzeichnet, dass**
- ein Netzfehler einen Netzzustand bildet, und/oder
- Schalterstellungen zum Einstellen oder Umstellen einer Netztopologie einen Netzzustand bilden, und/oder
- ein dynamischer Umrichteranteil einen Netzzustand bildet, wobei ein dynamischer Umrichteranteil ein Verhältnis beschreibt von
- durch umrichtergeführte Einspeiseeinheiten in das elektrische Versorgungsnetz oder einen Netzabschnitt davon eingespeister Leistung zu
- insgesamt durch alle Einspeiseeinheiten in das elektrische Versorgungsnetz oder den Netzabschnitt eingespeister Leistung.

4. Verfahren nach einem der vorstehenden Ansprüche, **dadurch gekennzeichnet, dass**
- eine der beiden Steuerfunktionen, beide Steuerfunktionen oder, wenn wenigstens eine der beiden Steuerfunktionen aus mehreren Teilsteuerfunktionen zusammengesetzt ist, eine oder mehrere dieser Teilsteuerfunktionen jeweils dadurch verändert werden, dass sie
- jeweils aus mehreren vorbestimmten Auswahlsteuerfunktionen ausgewählt werden, insbesondere, dass sie jeweils aus einer Kurvenschar oder einer Kennflächenschar ausgewählt werden, und/oder
- jeweils in einer Parametrierung verändert und/oder
- jeweils in einer Funktionscharakteristik verändert werden, wobei die Funktionscharakteristik wenigstens eine ist, aus der Liste umfassend
- eine Breite und/oder eine Position eines Totbandbereichs der Steuerfunktion bzw. der Teilsteuerfunktion,
- ein Grenzwert der Steuerfunktion bzw. der Teilsteuerfunktion und
- ein Gradient oder eine Steigung der Steuerfunktion bzw. der Teilsteuerfunktion.

5. Verfahren nach einem der vorstehenden Ansprüche, **dadurch gekennzeichnet, dass**
- eine oder beide Steuerfunktionen, oder eine oder mehrere Teilsteuerfunktionen durch eine Gewichtung veränderlich sind, wobei die Gewichtung insbesondere als Gewichtungsfaktor ausgebildet ist, und
- die jeweilige Steuerfunktion bzw. Teilsteuerfunktion durch Einstellen ihrer Gewichtung eingestellt wird.

6. Verfahren nach einem der vorstehenden Ansprüche, **dadurch gekennzeichnet, dass**
- die Wirkleistungssteuerfunktion realisiert wird durch
- eine Wirkleistungsfrequenzfunktion, die eine Teilsteuerfunktion bildet und einen Zusammenhang zwischen erfasster Netzfrequenz und einem ersten Wirkleistungswert angibt, und
- eine Wirkleistungsspannungsfunktion, die eine Teilsteuerfunktion bildet und einen Zusammenhang zwischen erfasster Netzspannung und einem zweiten Wirkleistungswert angibt,
- wobei die Zusatzwirkleistung in Abhängigkeit von dem ersten und zweiten Wirkleistungswert bestimmt wird, insbesondere aus einer Summe des ersten und zweiten Wirkleistungswertes, und
- die Wirkleistungsfrequenzfunktion durch eine Wirkleistungsfrequenzgewichtung, und
- die Wirkleistungsspannungsfunktion durch eine Wirkleistungsspannungsgewichtung einstellbar sind, und zum Verändern dieser beiden Teilsteuerfunktionen
- die Wirkleistungsfrequenzgewichtung und die Wirkleistungsspannungsgewichtung, zumindest eine davon, so verändert werden, dass
- sich ein Wirkleistungsgewichtungsquotient verändert, der einen Quotienten zwischen der Wirkleistungsfrequenzgewichtung und der Wirkleistungsspannungsgewichtung verändert.

7. Verfahren nach einem der vorstehenden Ansprüche, **dadurch gekennzeichnet, dass**
- die Blindleistungssteuerfunktion realisiert wird durch
- eine Blindleistungsfrequenzfunktion, die eine Teilsteuerfunktion bildet und einen Zusammenhang zwischen erfasster Netzfrequenz und einem ersten Blindleistungswert angibt, und
- eine Blindleistungsspannungsfunktion, die eine Teilsteuerfunktion bildet und einen Zusammenhang zwischen erfasster Netzspannung und einem zweiten Blindleistungswert angibt,
- wobei die Zusatzblindleistung in Abhängigkeit von dem ersten und zweiten Blindleistungswert bestimmt wird, insbesondere aus einer Summe des ersten und zweiten Blindleistungswertes, und
- die Blindleistungsfrequenzfunktion durch eine Blindleistungsfrequenzgewichtung, und
- die Blindleistungsspannungsfunktion durch eine Blindleistungsspannungsgewichtung einstellbar sind, und zum Verändern dieser beiden Steuerfunktionen
- die Blindleistungsfrequenzgewichtung und die Blindleistungsspannungsgewichtung, zumindest eine davon, so verändert werden, dass
- sich ein Blindleistungsgewichtungsquotient verändert, der einen Quotienten zwischen der Blindleistungsfrequenzgewichtung und der Blindleistungsspannungsgewichtung verändert.

8. Verfahren nach einem der vorstehenden Ansprüchen, insbesondere nach Anspruch 7 rückbezogen auf Anspruch 6, **dadurch gekennzeichnet, dass**
- mit steigendem statischen Umrichteranteil und/oder mit steigendem dynamischen Umrichteranteil
- Teilsteuerfunktionen so verändert werden, dass
- ein bzw. der Wirkleistungsgewichtungsquotient sinkt, und/oder
- ein bzw. der Blindleistungsgewichtungsquotient steigt, und/oder
- ein Wirkleistungsverhältnis dem Betrage nach sinkt, das ein Verhältnis einer mittleren normierten Steigung der Wirkleistungsfrequenzfunktion zu einer mittleren normierten Steigung der Wirkleistungsspannungsfunktion beschreibt, und/oder
- ein Blindleistungsverhältnis dem Betrage nach steigt, das ein Verhältnis einer mittleren normierter Steigung der Blindleistungsfrequenzfunktion zu normierter Blindleistungsspannungsfunktion beschreibt.

9. Verfahren nach einem der vorstehenden Ansprüche, **dadurch gekennzeichnet, dass**
- ein bzw. das Wirkleistungsverhältnis, ein Verhältnis einer mittleren normierten Steigung der Wirkleistungsfrequenzfunktion zu einer mittleren normierten Steigung der Wirkleistungsspannungsfunktion beschreibt, wobei
- die Steigung der Wirkleistungsfrequenzfunktion normiert ist auf einen Quotienten einer Nennleistung der Einspeiseeinheit zu einer maximal zulässigen Frequenzabweichung der Netzfrequenz von der Nennfrequenz, und
- die Steigung der Wirkleistungsspannungsfunktion normiert ist auf einen Quotienten der Nennleistung der Einspeiseeinheit zu einer maximal zulässigen Spannungsabweichung der Netzspannung von der Nennspannung, wobei
- das Wirkleistungsverhältnis dem Betrage nach mit steigendem statischen Umrichteranteil und/oder mit steigendem dynamischen Umrichteranteil sinkt, und einen Wert kleiner als 1 aufweist, wenn der statische Umrichteranteil und/oder der dynamische Umrichteranteil 80% erreicht oder übersteigt, und/oder
- ein bzw. das Blindleistungsverhältnis, ein Verhältnis einer mittleren normierten Steigung der Blindleistungsfrequenzfunktion zu normierter Blindleistungsspannungsfunktion beschreibt, wobei
- die Steigung der Blindleistungsfrequenzfunktion normiert ist auf einen Quotienten einer Nennleistung der Einspeiseeinheit zu einer maximal zulässigen Frequenzabweichung der Netzfrequenz von der Nennfrequenz, und
- die Steigung der Blindleistungsspannungsfunktion normiert ist auf einen Quotienten einer Nennleistung der Einspeiseeinheit zu einer maximal zulässigen Spannungsabweichung der Netzspannung von der Nennspannung, wobei
- das Blindleistungsverhältnis dem Betrage nach mit steigendem statischen Umrichteranteil und/oder mit steigendem dynamischen Umrichteranteil steigt, und einen Wert größer als 1 aufweist, wenn der statische Umrichteranteil und/oder der dynamische Umrichteranteil 80% erreicht oder übersteigt.

10. Einspeiseeinheit, insbesondere Windenergieanlage (100) oder Windpark (112), zum Austauschen elektrischer Leistung zwischen der Einspeiseeinheit und einem elektrischen Versorgungsnetz (120) an einem Netzanschlusspunkt (118), wobei
- das elektrische Versorgungsnetz (120) eine veränderliche Netzspannung und eine veränderliche Netzfrequenz aufweist, und durch eine Nennspannung und eine Nennfrequenz gekennzeichnet ist, und
- die Einspeiseeinheit dazu vorbereitet ist, das Austauschen so zu steuern, dass
- das Austauschen elektrischer Leistung das Austauschen von Wirk- und Blindleistung umfasst,
- das Austauschen der Wirkleistung in Abhängigkeit von einer frequenz- und spannungsabhängigen Wirkleistungssteuerfunktion gesteuert wird, wobei
- die Wirkleistungssteuerfunktion eine zusätzlich zu einem Wirkleistungsgrundwert einzuspeisende Zusatzwirkleistung in Abhängigkeit von der erfassten Netzfrequenz und in Abhängigkeit von der erfassten Netzspannung vorgibt,
- das Austauschen der Blindleistung in Abhängigkeit von
- einer frequenz- und spannungsabhängigen Blindleistungssteuerfunktion gesteuert wird, wobei
- die Blindleistungssteuerfunktion eine zusätzlich zu einem Blindleistungsgrundwert einzuspeisende Zusatzblindleistung in Abhängigkeit von der erfassten Netzfrequenz und in Abhängigkeit von der erfassten Netzspannung vorgibt, und
- die Wirkleistungssteuerfunktion und die Blindleistungssteuerfunktion jeweils eine Steuerfunktion bilden und in Abhängigkeit von
- wenigstens einer Netzcharakteristik und/oder
- wenigstens einem Netzzustand des elektrischen Versorgungsnetzes (120) eingestellt werden.

11. Einspeiseeinheit nach Anspruch 10, **dadurch gekennzeichnet, dass**
- die Einspeiseeinheit dazu eingerichtet ist, ein Verfahren nach einem der Ansprüche 1 bis 9 auszuführen, und/oder dass
- die Einspeiseeinheit eine oder mehrere Umrichtereinheiten (105) aufweist zum Austauschen elektrischer Leistung mit dem elektrischen Versorgungsnetz (120), und dass
- die Einspeiseeinheit wenigstens eine Steuereinheit (103) aufweist, die jeweils dazu eingerichtet ist, die Umrichtereinheit (105) oder eine der Umrichtereinheiten anzusteuern, wobei auf der wenigstens einen Steuereinheit eine Steuerung zum Steuern eines Verfahrens nach einem der Ansprüche 1 bis 9 implementiert ist.
